(19) Europäisches Patentamt
European Patent Office
Office européen des brevets

(11) **EP 3 651 047 A1**

(12) **EUROPEAN PATENT APPLICATION**
published in accordance with Art. 153(4) EPC

(43) Date of publication:
**13.05.2020 Bulletin 2020/20**

(51) Int Cl.:
***G06F 21/62*** (2013.01)

(21) Application number: **18828031.7**

(86) International application number:
**PCT/JP2018/023950**

(22) Date of filing: **25.06.2018**

(87) International publication number:
**WO 2019/009116 (10.01.2019 Gazette 2019/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.07.2017 JP 2017133260**

(71) Applicant: **Sony Corporation**
**Tokyo 108-0075 (JP)**

(72) Inventor: **TANAKA, Yu**
**Tokyo 108-0075 (JP)**

(74) Representative: **D Young & Co LLP**
**120 Holborn**
**London EC1N 2DY (GB)**

(54) **INFORMATION PROCESSING DEVICE, INFORMATION PROCESSING SYSTEM, INFORMATION PROCESSING METHOD AND PROGRAM**

(57)     A configuration is realized that calculates a data processing result by using confidential information and presents the processing result without disclosing the confidential information such as personal information and the like. A user device that transmits concealment data of user input data and a server that executes data processing based on received data from the user device are provided. The user device executes data generalization processing for converting the input data into generalized data including the input data and data other than the input data as concealment processing of the input data and transmits the generalized data to the server. The server develops the input generalized data into a plurality of pieces of individual data including the user input data, executes data processing to which each of the plurality of pieces of data is applied, calculates a data processing result corresponding to each piece of the individual data, and returns the result to the user device.

*FIG. 2*

**Description**

TECHNICAL FIELD

The present disclosure relates to an information processing device, an information processing system, an information processing method, and a program. More specifically, the present disclosure relates to an information processing device, an information processing system, an information processing method, and a program capable of generating and providing a data processing result based on confidential information, for example, results indicating whether or not a service can be provided, and the like without disclosing confidential information such as personal information.

BACKGROUND ART

For example, in a case where a user purchases products, contracts insurances, and the like, there is a case where the user who plans to purchase the product and plans to contract the insurance needs to provide sensitive information (security data) that is personal information with high confidentiality such as information regarding an address, the name, the age, and the like of the user, a health condition, and the like to a dealer and an insurance company.

In particular, at present, the product purchases and the insurance contract processing have been increasingly performed via a communication network, and the personal information of the user (customer) is exchanged via a network.

For example, there is a data-linked health insurance that provides an optimal insurance on the basis of personal health condition data.

In the data-linked health insurance, in order to determine whether or not the user can purchase the insurance and to calculate insurance premiums, the personal information such as the health condition of the user is required.

However, both users and insurance companies have, for example, the following demands and problems.

The user desires to know information whether or not the user can purchase the insurance and whether or not the insurance premiums can be reduced. However, the user desires to avoid a possibility that the user cannot purchase the insurance or the insurance premiums are increased, that is, to avoid to provide unfavorable personal information of the user to the company.

Moreover, there is a concern that the personal information, that is, privacy is leaked.

On the other hand, the insurance companies desire to acquire accurate user data, that is, the personal information such as the health condition and the like of the user for accurate insurance purchase availability determination and accurate insurance premiums calculation. Furthermore, to develop new insurance products, it is necessary to accumulate more personal information such as health conditions, medical histories, and the like of many users.

Ideally, the users and the insurance companies realize objects of both of them without disclosing the personal information to each other.

That is, without disclosing the personal information to each other, the user acquires the information necessary for contract determination such as whether or not the user can purchase the insurance and the insurance premiums can be reduced, and on the other hand, the insurance companies can provide the accurate insurance purchase availability determination and insurance premiums calculation result to the user. This is an ideal situation.

In recent years, for example, a technology for analyzing data association such as correlation and similarity between a large number of pieces of confidential information (secure data) such as personal information has been variously studied.

For example, there is a method for analyzing the association between the pieces of data by using encrypted data of the confidential information (secure data) and concealment data such as converted data.

Note that calculation processing executed by using data obtained by concealing original data such as data encryption and conversion processing is referred to as secret calculation or secure calculation.

For example, Patent Document 1 (Published Japanese Translation of PCT International Application No. 2008-521025) discloses a configuration that obtains an index of similarity between two pieces of data by secure calculation. Specifically, a configuration is disclosed in which an inner product of the two pieces of data is obtained by the secure calculation and a Hamming distance between the two pieces of data is calculated as a similarity index value.

In this document, as a specific inner product calculation method by the secure calculation, a method is disclosed in which input data is encrypted by applying a homomorphic encryption and homomorphic addition or multiplication is performed on the encrypted data.

However, the homomorphic encryption that is public key encryption takes time to encrypt data. Therefore, in a case where a larger amount of data is processed, there is a problem in that a calculation amount increases and a load and a processing time of a computing device increase. Furthermore, there is a problem in that a communication amount increases because a size of a ciphertext is large.

Moreover, Patent Document 2 (Japanese Patent Application Laid-Open No. 2014-206696) discloses a configuration that, in a case where a plurality of organizations holds two different pieces of data to be concealed in each organization, calculates an inner product of the two pieces of data with a small calculation amount.

The disclosed configuration in Patent Document 2 shortens time taken for data concealment processing and inner product calculation by applying concealment data.

However, this disclosed method has problems in that the configuration needs a plurality of independent computers that performs secure calculation and increases in the sizes of computer resources and costs cannot be avoided.

CITATION LIST

PATENT DOCUMENT

Patent Document 1: Published Japanese Translation of PCT International Application No. 2008-521025
Patent Document 2: Japanese Patent Application Laid-Open No. 2014-206696

SUMMARY OF THE INVENTION

PROBLEMS TO BE SOLVED BY THE INVENTION

For example, the present disclosure has been made in view of the above problems. An object of the present disclosure is to provide an information processing device, an information processing system, an information processing method, and a program capable of generating and providing a processing result based on confidential information without disclosing confidential information with high confidentiality such as personal information and the like to each other and without using secure calculation incurring a high cost.

SOLUTIONS TO PROBLEMS

A first aspect of the present disclosure is an information processing device including a generalization processing unit that executes generalization processing for converting input data into generalized data including the input data and data other than the input data as concealment processing of the input data and a communication unit that transmits the generalized data on which the generalization processing is executed by the generalization processing unit.

Moreover, a second aspect of the present disclosure is an information processing device including a data processing unit that inputs generalized data including user input data and data other than the user input data, develops the generalized data to a plurality of pieces of individual data including the user input data and the data other than the user input data, and executes data processing to which each of the plurality of pieces of individual data is applied and calculates a data processing result corresponding to each piece of the individual data.

Moreover, a third aspect of the present disclosure is an information processing system including a user device that transmits concealment data of user input data and a server that executes data processing based on received data from the user device and returns a processing result to the user device, in which the user device executes generalization processing for converting input data into generalized data including the input data and data other than the input data as concealment processing of the input data and transmits the converted data to the server, and the server inputs the generalized data and classifies the generalized data into a plurality of pieces of individual data including the user input data and data other than the user input data, and executes data processing to which each of the plurality of pieces of individual data is applied, calculates a data processing result corresponding to each piece of the individual data, and returns the result to the user device.

Moreover, a fourth aspect of the present disclosure is an information processing method executed by an information processing device, in which a generalization processing unit executes generalization processing for converting input data into generalized data including the input data and data other than the input data as concealment processing of the input data, and a communication unit transmits the generalized data.

Moreover, a fifth aspect of the present disclosure is an information processing method executed by an information processing device, in which a data processing unit of the information processing device inputs generalized data including user input data and data other than the user input data, develops the generalized data to a plurality of pieces of individual data including the user input data and the data other than the user input data, and executes data processing to which each of the plurality of pieces of individual data is applied and calculates a data processing result corresponding to each piece of the individual data.

Moreover, a sixth aspect of the present disclosure is a program for causing an information processing device to execute information processing, in which the program causes a generalization processing unit to execute generalization processing for converting input data into generalized data including the input data and data other than the input data as concealment processing of the input data, and causes a communication unit to transmit the generalized data.

Moreover, a seventh aspect of the present disclosure is

a program for causing an information processing device to execute information processing, in which

the program causes a data processing unit of the information processing device to execute

processing for inputting generalized data including user input data and data other than the user input data,

processing for developing the generalized data to a plurality of pieces of individual data including the user input data and the data other than the user input data, and

processing for executing data processing to which each of the plurality of pieces of individual data is applied and calculating a data processing result corresponding to each piece of the individual data.

Note that the program according to the present disclosure is a program provided to, for example, an information processing device and a computer system capable of executing various program codes, for example, by a storage medium. By executing such a program by the information processing device and a program execution unit in the computer system, processing according to the program is realized.

Other purposes, characteristics, and advantages of the present disclosure would be obvious by the detailed description based on the embodiments of the present invention as described later and the attached drawings. Note that, in the present specification, a system is a logical group configuration of a plurality of devices, and the devices of the respective configurations are not limited to be housed in the same casing.

EFFECTS OF THE INVENTION

According to a configuration of an embodiment of the present disclosure, a configuration is realized that can calculate a data processing result by using confidential information and can present the processing result without disclosing the confidential information such as personal information and the like.

Specifically, for example, a user device that transmits concealment data of user input data and a server that executes data processing based on received data from the user device are provided. The user device executes data generalization processing for converting the input data into generalized data including the input data and data other than the input data as concealment processing of the input data and transmits the generalized data to the server. The server develops the input generalized data into a plurality of pieces of individual data including the user input data, executes data processing to which each of the plurality of pieces of data is applied, calculates a data processing result corresponding to each piece of the individual data, and returns the result to the user device.

According to this configuration, a configuration is realized that can calculate a data processing result by using confidential information and can present the processing result without disclosing the confidential information such as personal information and the like.

Note that the effects described herein are only exemplary and not limited to these. Furthermore, there may be an additional effect.

BRIEF DESCRIPTION OF DRAWINGS

Fig. 1 is a diagram for explaining an exemplary configuration of an information processing system.
Fig. 2 is a sequence diagram for explaining processing and a data communication sequence executed by a user device and a server included in the information processing system.
Fig. 3 is a diagram for explaining an example of an information input form.
Fig. 4 is a diagram for explaining an example of the information input form.
Fig. 5 is a diagram for explaining generalization processing on input information.
Fig. 6 is a diagram for explaining the generalization processing on the input information.
Fig. 7 is a diagram for explaining an example of information input to the information input form.
Fig. 8 is a diagram for explaining an example of the information input to the information input form.
Fig. 9 is a diagram for explaining an example of an input information transmission confirmation screen.
Fig. 10 is a diagram for explaining an example of matching calculation performed by a server device.
Fig. 11 is a diagram for explaining an example of the matching calculation performed by the server device.
Fig. 12 is a diagram for explaining exemplary compression processing of a result of the calculation performed by the server device.
Fig. 13 is a diagram illustrating an example of reception result information from the server displayed on a display unit of the user device.
Fig. 14 is a diagram illustrating an exemplary hardware configuration of an information processing device.

MODE FOR CARRYING OUT THE INVENTION

Hereinafter, an information processing device, an information processing system, an information processing method, and a program according to the present disclosure will be described in detail with reference to the drawings. The description will be made according to the following items.

1. Exemplary Configuration of Information Processing System
2. Sequence of Information Processing And Communication Processing Executed by Information Processing System

3. Specific Example of Processing Executed by Information Processing Device

3-1. Specific Example of Input Form

3-2. Input Data Generalization Processing

3-3. Specific Examples of Data Input to Input Form and Transmission Processing

3-4. Specific Example of Matching Processing

3-5. Specific Example of Result Data Transmission Processing from Server to User Device And Data Display on User Device

4. Exemplary Hardware Configuration of Information Processing Device

5. Summary of Configuration of Present Disclosure

[1. Exemplary Configuration of Information Processing System]

First, an exemplary configuration of an information processing system that executes processing according to the present disclosure will be described.

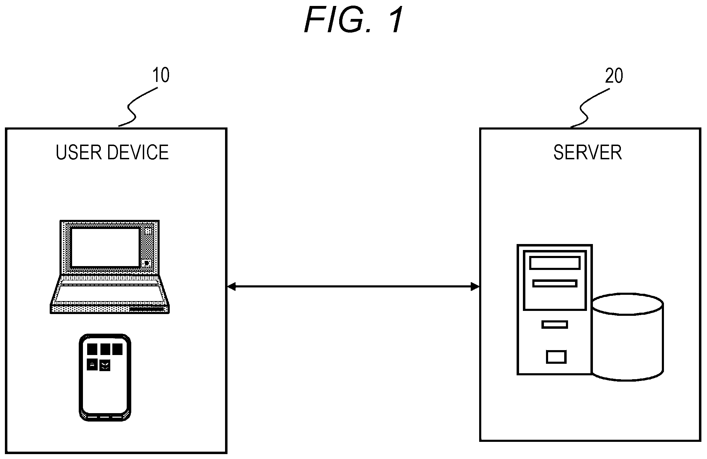

Fig. 1 is a diagram illustrating an exemplary configuration of the information processing system that executes the processing according to the present disclosure.

As illustrated in Fig. 1, as two information processing devices included in the information processing system, a user device 10 and a server 20 exist.

The user device 10 and the server 20 communicate with each other and execute data processing.

The user device 10 is, for example, an information processing device such as a PC, a smartphone, a tablet terminal, and the like of a user.

The server 20 is, for example, an information processing device of a service provider that provides a service such as product sales and insurance contracts. Note that the server 20 includes a database as a storage unit that stores user information received from various users.

Each of the user device 10 and the server 20 includes a communication unit, and performs communication via a communication network, for example, the Internet or the like.

In the embodiment described below, as an example, it is assumed that the server 20 be a server managed by an insurance company.

The insurance company requests a user who uses the user device 10 to input various information (user information) required for determination on whether or not an insurance contracts can be concluded and for calculation of insurance premiums. The user uses the user device 10 to input the user information and transmits the user information to the server 20.

Note that an embodiment described below is merely an example, and the processing according to the present disclosure is not limited to the service provided by the insurance company and can be applied to various configurations that execute processing to which confidential information with high confidentiality such as personal information is applied.

[2. Sequence of Information Processing And Communication Processing Executed by Information Processing System]

Next, sequences of information processing and communication processing executed by the information processing system described with reference to Fig. 1, in other words, the information processing system including the user device 10 and the server 20 will be described.

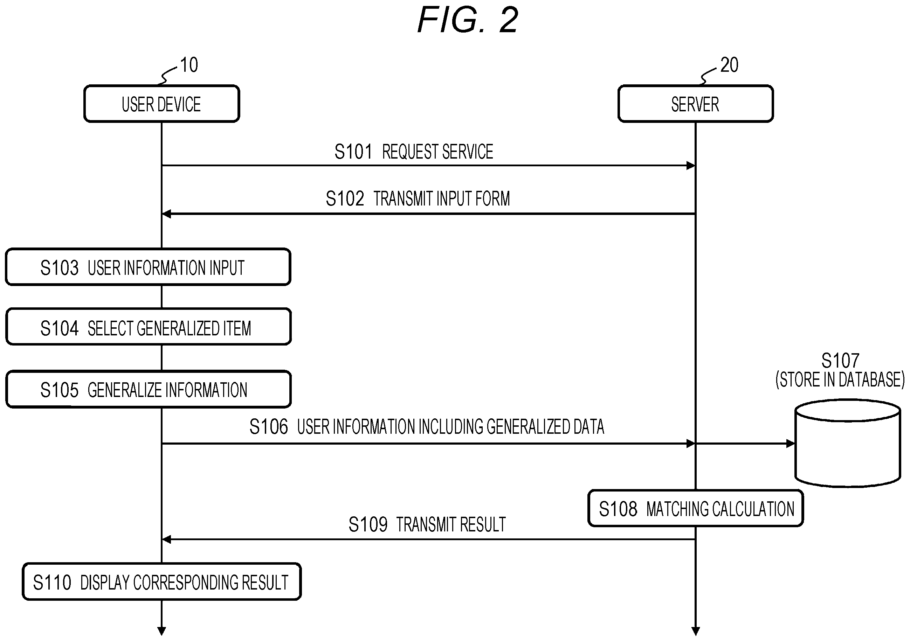

Fig. 2 is a sequence diagram illustrating an example of sequences of information processing and communication processing executed between the user device 10 and the server 20.

First, with reference to Fig. 2, a series of processing executed between the user device 10 and the server 20 will be described, and thereafter, details of each processing will be sequentially described.

(Step S101)

Step S101 is service request processing from the user device 10 to the server 20.

Here, as an example, it is assumed that processing for requesting an insurance company on the side of the server 20 to examine insurance purchase conditions and the like be executed.

Specifically, the user inputs information such as an age, health information, and the like to the user device 10 and transmits the input information to the server device 20. The insurance company on the side of the server 20 executes processing for determining whether or not the user can purchase the insurance, calculating the purchase conditions such as insurance premiums on the basis of the information, and presenting the result to the user, for example.

However, the configuration according to the present disclosure can execute processing on information that the user requires to keep confidential without disclosing the information.

The specific processing will be described later.

(Step S102)

Step S102 is processing in which the server 20 that has received the service request from the user device 10 in step S101 transmits an input form used for information input to the user device 10.

For example, the input form is used to input the gender, the age, the address, the medical history, the health condition, and the like of the user.

A specific example will be described later.

(Step S103)

Step S103 is processing executed by the side of the user device 10.

In step S103, the input form received from the server 20 in step S102 is displayed on a display unit of the user device 10, and the user inputs information according to the input form.

(Steps S104 and S105)

Steps S104 and S105 are processing executed by the side of the user device 10.

After the user has input the information according to the input form in step S103, the user selects an input item that the user does not desire to disclose as a generalized item in step S104.

In the description of the present disclosure, data generalization processing is conversion processing on a user's input value that is processing for converting the input value of the user into data in a certain range including the input value (generalized data).

For example, there is a case where personal information such as the age and the like is information that the user does not desire to disclose.

In such a case, the user checks a generalization processing request check box provided with an age input field.

Then, in step S105, the user device 10 converts the value of the age input to the input form into generalized data.

A generalization processing unit that is a data processing unit of the user device executes this data conversion processing, in other words, the generalization processing and transmits the converted generalized data to the server 20 via a communication unit.

For example, when the user inputs the age of "36 years old" and further checks the generalization processing request check box provided together with the age input field, 36 years old that is the input value of the user is converted into the generalized data, for example, "from 30 to 39 years old". This generalized data is transmitted from the user device 101 to the server 20.

According to the generalization processing, it is not necessary to disclose the personal information that the user does not desire to disclose.

Note that a specific processing example will be described later.

(Step S106)

The user information input to the input form by the user is transmitted from the user device 10 to the server 20 in step S106.

Note that a value of an item set as the generalized item by the user in step S104 is converted into generalized data and transmitted.

(Step S107)

Next, in step S107, the server 20 stores the user information received from the user device 10 in a database.

(Step S108)

Next, in step S108, the server 20 performs matching calculation based on the user information stored in the database.

The matching calculation is processing for generating information to be presented to the user by applying a parameter coincide (match) with the user information received from the user device 10 in step S106 and applying a data calculation algorithm such as a predetermined function and the like.

In the present processing example, the server 20 is a server of the insurance company, and it is assumed that the server 20 calculates whether or not the user can purchase the insurance and the insurance premiums by applying the parameter that coincides (match) with the input information of the user.

(Steps S109 and S110)

The server 20 transmits the information calculated by the matching calculation in step S108, for example, the information regarding whether or not the user can purchase the insurance and the insurance premiums to the user device 10 in step S109.

In step S110, the user device 10 displays the information regarding whether or not the user can purchase the insurance and the insurance premiums received from the server device 20 in step S109 on the display unit of the user device 10.

[3. Specific Example of Processing Executed by Information Processing Device]

Next, a specific example of processing executed according to the sequence described with reference to Fig. 2 will be described.

[3-1. Specific Example of Input Form]

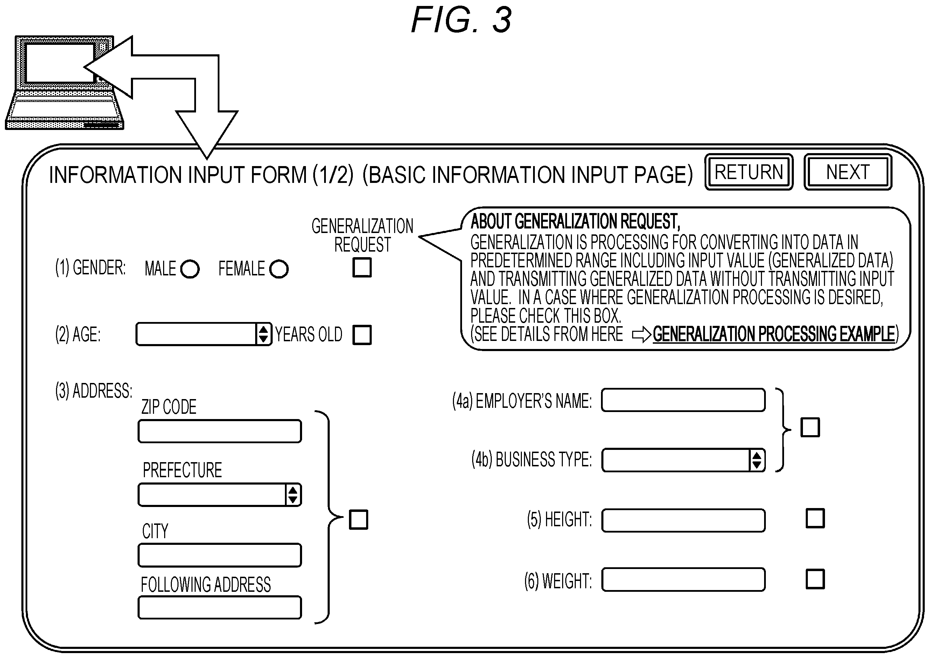

First, an example of the input form that is transmitted from the server 20 to the user device 10 in step S102 will be described with reference to Fig. 3 and the subsequent diagrams.

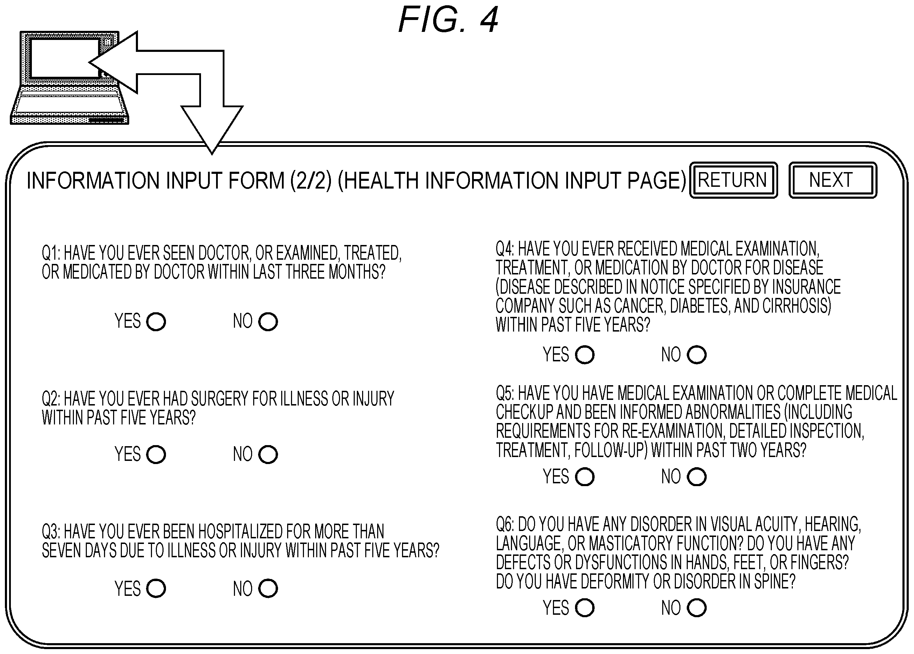

Figs. 3 and 4 are diagrams illustrating an example of the input form transmitted from the server 20 to the user device 10 and an example in which the input form is displayed on the display unit of the user device 20.

For example, the server 20 generates the input form, for example, as illustrated in Figs. 3 and 4 and transmits the generated input form to the user device 10.

In this example, the input form includes a basic information input page illustrated in Fig. 3 and a health information input page illustrated in Fig. 4.

Fig. 3 is the basic information input page and includes the following input items.

(1) Gender
(2) Age
(3) Address
(4) Employer's name and business type
(5) Height
(6) Weight

Features of the input form transmitted to the user in the processing according to the present disclosure are as follows.

(Feature 1) Do not request to input an identifier
(Feature 2) Request to input a quasi-identifier and sensitive information
(Feature 3) Whether or not to generalize the quasi-identifier can be specified.

Note that the "identifier" is an attribute used to identify an individual, for example, an individual name, an account ID, a service ID, and the like.

The "quasi-identifier" is generally described as "attribute that cannot be regarded as an ID, but can be regarded as an ID in combination with other attribute".

The "sensitive information" is information regarding personal privacy.

Personal information other than the "identifier" and the "quasi-identifier" is classified as the "sensitive information".

It is required for the user to input basic information (1) to (6) illustrated in Fig. 3.

Furthermore, a generalization request check box is set adjacent to each of the items, that is, (1) gender, (2) age, (3) address, (4) employer's name and business type, (5) height, and (6) weight.

As described in a word balloon in Fig. 3, the generalization is processing for converting the input value into the data in the predetermined range including the input value (generalized data) and transmitting the converted data without transmitting the input value.

For each item, the user checks the generalization request check box in a case where the generalization processing is desired.

Note that specific example of the generalization processing corresponding to each input item will be described later.

Next, a next page of the input form will be described with reference to Fig. 4.

Fig. 4 is a diagram illustrating an exemplary configuration of the health information input page included in the input form.

The health information input page includes the following question items (Q1 to Q6) and answer input fields (Yes, No) corresponding to the respective items.

Q1: Have you ever seen a doctor, or examined, treated, or medicated by the doctor within the last three months?
Q2: Have you ever had surgery for illness or injury within the past five years?
Q3: Have you ever been hospitalized for more than seven days due to illness or injury within the past five years?
Q4: Have you ever received a medical examination, treatment, or medication by a doctor for diseases (disease described in notice specified by insurance company such as cancer, diabetes, and cirrhosis) within the past five years?
Q5: Have you had a medical examination or a complete medical checkup and been informed abnormalities (including requirements for re-examination, detailed inspection, treatment, and follow-up) within the past two years?
Q6: Do you have any disorder in visual acuity, hearing, language, or masticatory function. Do you have any defects or dysfunctions in hands, feet, or fingers. Do you have a deformity or disorder in the spine?

The user checks one of the answer input fields (Yes, No) corresponding to each item set corresponding to each the questions (Q1) to (Q6) regarding the health information.

Note that, the generalization request check box is not set regarding the answer about the health information.

This is because the answers about the health information are necessary for the determination whether or not the user can purchase the insurance and the calculation of the insurance premiums.

[3-2. Input Data Generalization Processing]

Next, a specific example of the data generalization processing executed in a case where the generalization request check box described with reference to Fig. 3 above is checked will be described.

Note that the data generalization processing is executed by the user device 10.

For example, when transmitting the input form to the user device 10, the server 20 also transmits a processing program (generalization processing execution program) used to execute the generalization processing.

The user device 10 executes the program provided from the server 20 and executes the data generalization processing.

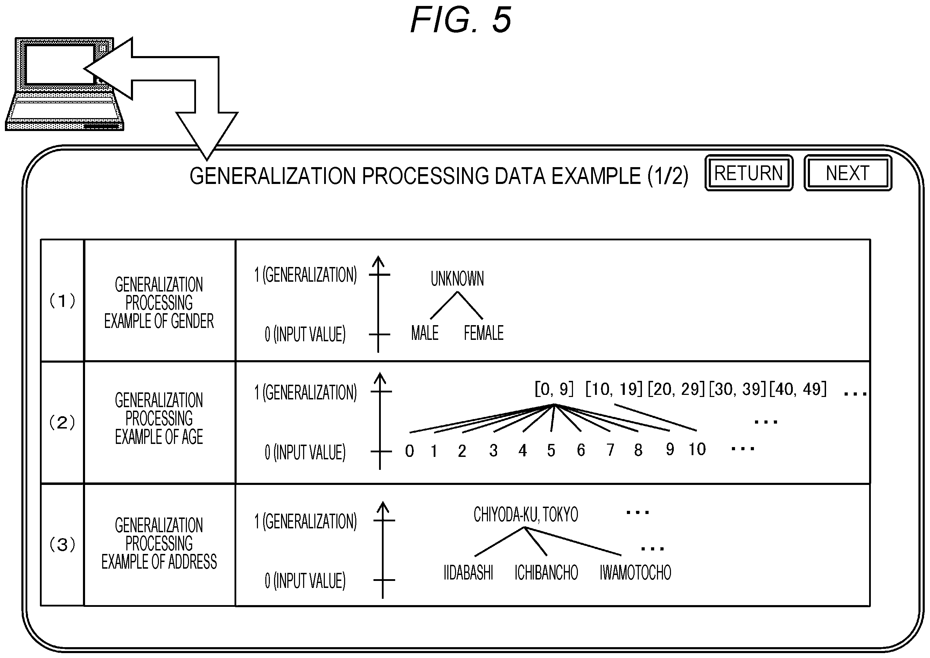

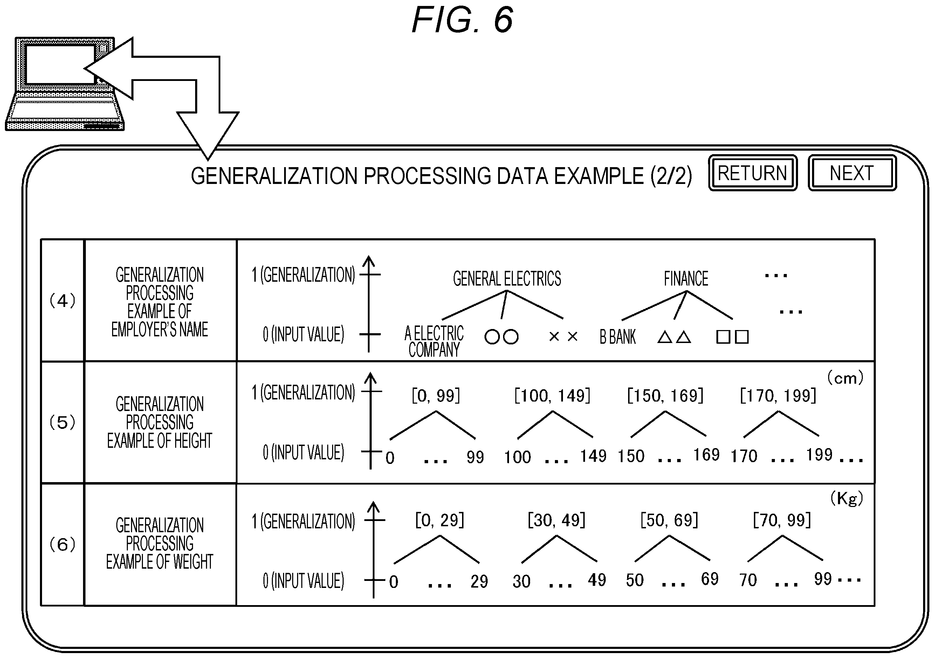

Figs. 5 and 6 are diagrams illustrating a generalization processing example of the input items of the basic information described with reference to Fig. 3, in other words, the items including (1) gender, (2) age, (3) address, (4) employer's name and business type, (5) height, and (6) weight.

Fig. 5 illustrates the data generalization processing on each piece of the data of (1) gender, (2) age, and (3) address.

For each item, the input value of the user to the input form is illustrated on the lower side, and the generalized data is illustrated on the upper side.

In a case of [input item = (1) gender], the user input value is one of "male" or "female".

In a case where the generalization request check box of [input item = (1) gender] is checked, the generalization processing execution program executes processing for converting the input value into the generalized data = "unknown" in both cases where the user input value is "male" and "female".

As a result, the data transmitted from the user device 10 to the server 20 is "(1) gender = unknown".

Next, generalization processing of [input item = (2) age] will be described.

In a case of [input item = (2) age], the user input value is an actual age. For example, the actual age such as "36 years old" is input.

In a case where the generalization request check box of [input item = (2) age] is checked, the generalization processing execution program converts the actual age that is the user input value into generalized data according to the input value.

Specifically, the following data generalization processing will be executed.

In a case of the user input value = zero to nine years old, the generalized data is [0,9], in a case of the user input value = 10 to 19 years old, the generalized data is [10,19], in a case of the user input value = 20 to 29 years old, the generalized data is [20,29], in a case of the user input value = 30 to 39 years old, the generalized data is [30,39], in a case of the user input value = 40 to 49 years old, the generalized data is [40,49], in a case of the user input value = 50 to 59 years old, the generalized data is [50,59], and in a case of the user input value = 60 to 69 years old, the generalized data is [60,69]. The same applies to the subsequent ages.

[0, 9] means that the user's age is within a range of zero to nine years old.

[10, 19] means that the user's age is within a range of 10 to 19 years old.

The same applies to the subsequent ages.

In this way, the generalization processing of [input item = (2) age] is executed as processing for converting the data into data of an age range in 10 years unit including the user input value.

For example, in a case where the user input value = the actual age of 36 years old is input to [input item = (2) age] and the generalization request check box is checked, transmission data transmitted from the user device 10 to the server 20 is "(2) age = [30,39]". This data means that the user's age is within a range of 30 to 39 years old.

Next, generalization processing of [input item = (3) address] will be described.

In a case of [input item = (3) address], the user input value is a user's current address, and an address of the user is input to each of input fields of "zip code", "prefecture", "city", and "following address" illustrated in Fig. 3.

In a case where the generalization request check box of [input item = (3) address] is checked, the generalization processing execution program converts the data into data obtained by deleting data of "zip code" and data of "following address" from the input values to the respective input fields of "postal code", "prefecture", "city", and "following address".

For example, in a case where the user input value is

"zip code" = 1020077
"prefecture" = Tokyo,
"city" = Chiyoda-ku,
"following address" = 2-3-4 Iidabashi,
the input value is converted into generalized data = "Chiyoda-ku, Tokyo".

The transmission data to be transmitted from the user device 10 to the server 20 is "(3) address = Chiyoda-ku, Tokyo".

Next, generalization processing of [input item = (4) employer's name and business type] will be described with reference to Fig. 6.

In a case of [input item = (4) employer's name and business type], the user input value is a company name and a business type of the employer of the user, that is, a company name and a business type name, for example, "A Electric Company" and "general electrics", "B Bank" and "finance", "C store" and "product sales", and the like.

In a case where the generalization request check box of [input item = (4) employer's name and business type] is checked, the generalization processing execution program deletes the input value indicating the company name and converts the input value into data including only the business type.

For example, "A Electric Company" and "general electrics" are converted into only "general electrics".

"B Bank" and "finance" are converted into only "finance".

"C store" and "product sales" are converted into only "product sales".

The transmission data to be transmitted from the user device 10 to the server 20 is, for example, "(4) employer's name and business type = general electronics".

Next, generalization processing of [input item = (5) height] will be described.

In a case of [input item = (5) height], the user input value is the height of the user. For example, actual height data such as "175 cm" is input.

In a case where the generalization request check box of [input item = (5) height] is checked, the generalization processing execution program converts the user input value into generalized data according to the input value.

Specifically, the following data generalization processing will be executed.

In a case of the user input value = within a range of zero to 99 cm, the generalized data is [0,99], in a case of the user input value = within a range of 100 to 149 cm, the generalized data is [100,149], in a case of the user input value = within a range of 150 to 169 cm, the generalized data is [150,169], and in a case of the user input value = within a range of 170 to 199 cm, the generalized data is [170,199]. The same applies to the subsequent heights.

[0,99] means that the user's height is within a range of zero to 99 cm.

[150, 169] means that the user's height is within a range of 150 to 169 cm.

The same applies to the subsequent ages.

In this way, the generalization processing of [input item = (5) height] is executed as processing for converting the input value into the height data within a predetermined range including the user input value.

For example, in a case where the user input value = the actual height of 175 cm is input to [input item = (5) height] and the generalization request check box is checked, transmission data to be transmitted from the user device 10 to the server 20 is "(5) height = [170,199]". This data means that the user's height is within a range of 170 cm to 199 cm.

Next, generalization processing of [input item = (6) weight] will be described.

In a case of [input item = (6) weight], the user input value is the weight of the user. For example, actual weight data such as "75 Kg" is input.

In a case where the generalization request check box of [input item = (6) weight] is checked, the generalization processing execution program converts the user input value into generalized data according to the input value.

Specifically, the following data generalization processing will be executed.

In a case of the user input value = within a range of zero to 29 Kg, the generalized data is [0,29], in a case of the user input value = within a range of 30 to 49 Kg, the generalized data is [30,49], in a case of the user input value = within a range of 50 to 69 Kg, the generalized data is [50,69], and in a case of the user input value = within a range of 70 to 99 Kg, the generalized data is [70,99]. The same applies to the subsequent weights.

[0,29] means that the user's weight is within a range of zero to 29 Kg.

[50, 69] means that the user's weight is within a range of 50 to 69 Kg.

The same applies to the subsequent ages.

In this way, the generalization processing of [input item = (6) weight] is executed as processing for converting the input value into the weight data within a predetermined range including the user input value.

For example, in a case where the user input value = the actual weight of 75 Kg is input to [input item = (6) weight] and the generalization request check box is checked, transmission data to be transmitted from the user device 10 to the server 20 is "(6) weight = [70,99]". This data means that the user's weight is within a range of 70 Kg to 99 Kg.

As described above, the user device 10 executes the generalization processing on the input data as input data concealment processing by a data processing unit of the user device 10.

Note that the user device 10 selects input data in which specification information for requesting the generalization processing is input to a generalization request specification portion associated with the input data in the input form and executes the generalization processing and executes the generalization processing on the selected data.

The user device 10 executes data conversion processing for converting the input data into data having a broad concept including both of the input data and data other than the input data, that is, generalized data as the generalization processing on the input data and transmits the converted data to the server 20 via the communication unit.

That is, in a case where the input data is data having a narrower concept, the data processing unit of the user device 10 executes the generalization processing for converting the input data into the generalized data having a wider concept including the input data and the other data.

Specifically, in a case where the input data is numerical data such as an age, a height, a weight, and the like, the input data is converted into generalized numerical data having a wide concept including the input numerical data and other numerical data. Furthermore, in a case where the input data is positional data such as an address, processing is executed for converting the input data into generalized positional data having a wide concept including the input positional data and other positional data.

In this way, the generalization processing unit that is the data processing unit of the user device executes the generalization processing for converting the input data into the generalized data including data other than the input data in a predetermined range according to the type of the input data.

[3-3. Specific Examples of Data Input to Input Form and Transmission Processing]

Next, specific examples of data input to the input form and transmission processing will be described.

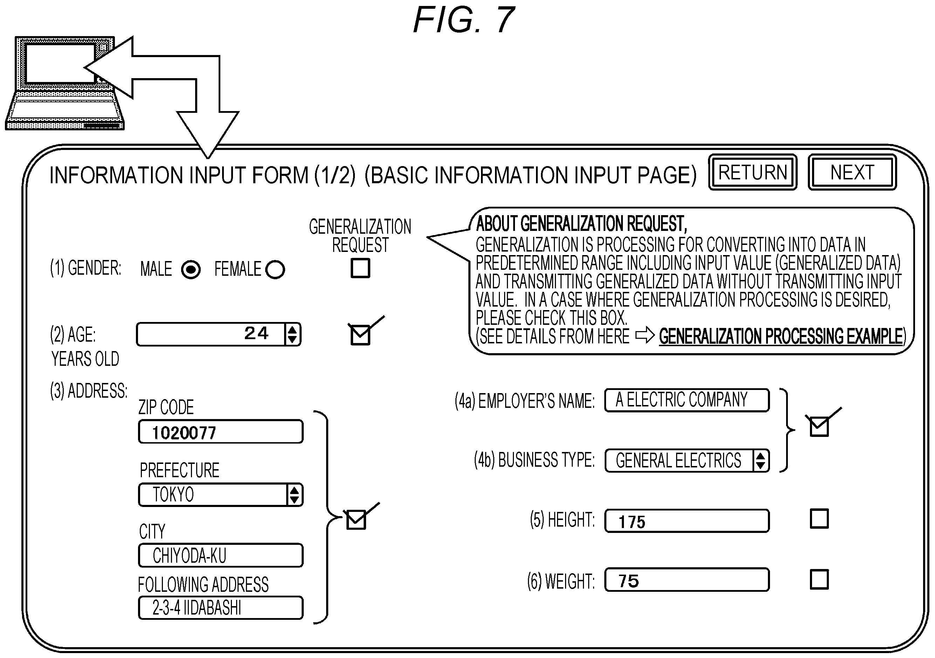

In Fig. 7, an input example by a user to the basic information input page in the input form described with reference to Fig. 3 is illustrated.

The input example illustrated in Fig. 7 is an example of a screen in which input to each of the following items is completed.

Input item (1) gender: input value = male, generalization request = no check,

Input item (2) age: input value = 24, generalization request = checked,

Input item (3) address: input value = 1020077 2-3-4 Iidabashi, Chiyoda-ku, Tokyo, generalization request =checked,

Input item (4) employer's name and business type: input value = A Electric Company, general electrics, generalization request = checked,

Input item (5) height: input value = 175, generalization request = no check, and

Input item (6) weight: input value = 75, generalization request = no check.

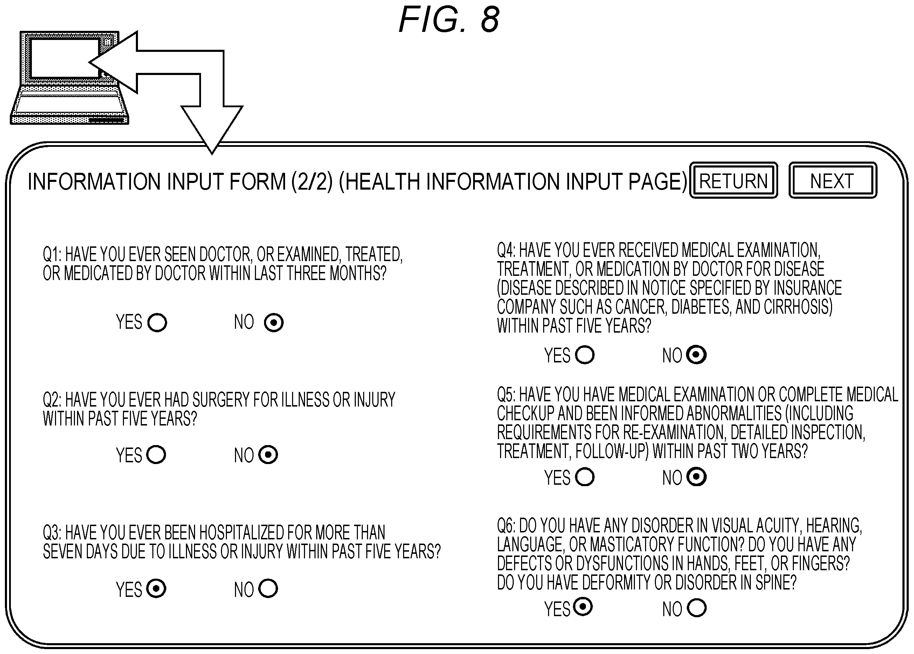

When the user performs input to the basic information input page illustrated in Fig. 7 and clicks a "next" button on the upper left of the screen, then, the health information input page illustrated in Fig. 8 is displayed, and the user performs input to the health information input page.

The example illustrated in Fig. 8 is an example of a user input result and an example in which the following inputs are made.

Q1 = "No"
Q2 = "No"
Q3 = "Yes"
Q4 = "No"
Q5 = "No"
Q6 = "Yes"

When the user performs input to the health information input page illustrated in Fig. 8 and clicks a "next" button on the upper right of the screen, then, a transmission information confirmation screen is displayed.

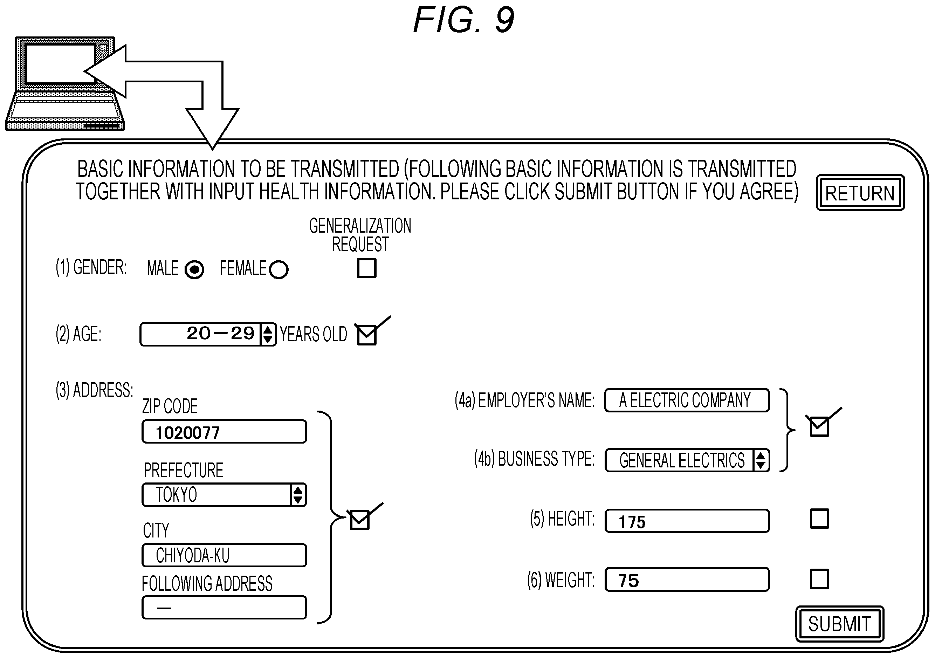

An example of the transmission information confirmation screen is illustrated in Fig. 9.

As illustrated in Fig. 9, as a guide message to the user, a message "The following basic information is transmitted together with the input health information. Please click the submit button if you agree" is displayed, and a list of the basic information to be transmitted is displayed.

In the transmission information screen illustrated in Fig. 9, set values of transmission information corresponding to the items of the basic information (1) to (6) illustrated in Fig. 3 are displayed. Specifically, the following set values of the transmission information are displayed.

Input item (1) gender: input value = male, generalization request = no check, regarding this input item, the user specifies that the generalization is not needed, and the input value = male is set as transmission data.

Input item (2) age: input value = 24 years old, generalization request = checked,

regarding this input item, the user specifies that the generalization is needed, and the input value = 24 years old is converted into generalized data = 20 to 29 years old, and the generalized data = 20 to 29 years old is set as transmission data.

Input item (3) address: input value = 1020077 2-3-4 Iidabashi, Chiyoda-ku, Tokyo, generalization request =checked,

regarding this input item, the user specifies that the generalization is needed, and the input value = 1020077 2-3-4 Iidabashi, Chiyoda-ku, Tokyo, is converted into generalized data = Chiyoda-ku, Tokyo, and the generalized data = Chiyoda-ku, Tokyo is set as transmission data.

Input item (4) employer's name and business type: input value = A Electric Company, general electrics, generalization request = checked,

regarding this input item, the user specifies that the generalization is needed, and the input value = A Electric Company and general electrics is converted into generalized data = general electrics, and the generalized data = general electrics is set as transmission data.

Input item (5) height: input value = 175, generalization request = no check, regarding this input item, the user specifies that the generalization is not needed, and the input value = 175 cm is set as transmission data.

Input item (6) weight: input value = 75, generalization request = no check,

regarding this input item, the user specifies that the generalization is not needed, and the input value = 75 Kg is set as transmission data.

When the user confirms the transmission setting information and accepts to transmit the information, the user clicks the submit button. According to this click processing, the basic information in which the data of the items is partially converted into the generalized data and the health information described with reference to Fig. 8 are transmitted to the server 20.

This transmission processing is processing in step S106 illustrated in the sequence diagram in Fig. 2.

[3-4. Specific Example of Matching Processing]

Next, details of matching processing in step S108 in the processing sequence described with reference to Fig. 2 will be described.

As described above with reference to Fig. 2, the server 20 performs matching calculation based on the user information stored in the database in step S108.

The matching calculation is processing for generating information to be presented to the user by applying a parameter that coincides (match) with the user information received from the user device 10 in step S106 and applying a data calculation algorithm such as a predetermined function and the like.

In the present processing example, the server 20 is a server of an insurance company, and it is assumed that the server 20 generate output information including whether or not the user can purchase the insurance and the insurance premiums on the basis of the input information of the user.

For example, a plurality of parameters that is parameters (P1, P2, P3, ...) corresponding to the respective input items such as the gender, the age, the address, and the like that are the input information of the user is input to an algorithm such as a predefined function and the like, and the result is calculated.

For example, in a case where a function for calculating an insurance purchase possibility (algorithm) is a function F, the result indicating whether or not an insurance can be purchased or cannot be purchased is calculated according to the function: F (P1, P2, P3, ...).

Similarly, in a case where a function for calculating the insurance premiums (algorithm) is a function G, the insurance premiums are calculated according to the function: G (P1, P2, P3, ...).

However, the user information received from the user device 10 includes generalized data.

That is, in the above example, for example, the age is set as the generalized data. In this case, the age information of the user included in the received data of the server 20 is not the actual age of the user = 24 years old and is generalized age data = 20 to 29 years old.

Therefore, the server 20 does not acquire an age parameter of the user = 24, and the age parameter of the user = 24 cannot be applied to the algorithms such as the functions F, G, and the like.

In this case, the server 20 applies the functions F and G by using 10 types of different age parameters included in the generalized age data = 20 to 29 years old that is the received data from the user device and calculates 10 types of results.

The same applies to the other generalized data.

In this way, the data processing unit of the server 20 executes data development processing for inputting the generalized data having a wide concept including the user input data and data other than the user input data from the user device 10 and classifying the generalized data into a plurality of pieces of individual data having a narrow concept including the user input data and executes the data processing to which each of the plurality of pieces of individual data is applied so as to calculate a data processing result corresponding to each piece of the individual data and provide the calculated result to the user device 10.

For example, in a case where the generalized data input from the user device 10 is generalized numerical data in a predetermined age range, the server 20 classifies the generalized numerical data into a plurality of different pieces of individual numerical data and executes data processing to which the plurality of different pieces of the classified individual numerical data is applied so as to calculate a data processing result corresponding to each piece of the individual numerical data.

Furthermore, in a case where the input generalized data is generalized positional data indicating an address in a predetermined range, the server 20 classifies the generalized positional data into a plurality of different pieces of individual positional data and executes data processing to which each of the plurality of different pieces of classified individual positional data is applied so as to calculate a data processing result corresponding to each piece of the positional data.

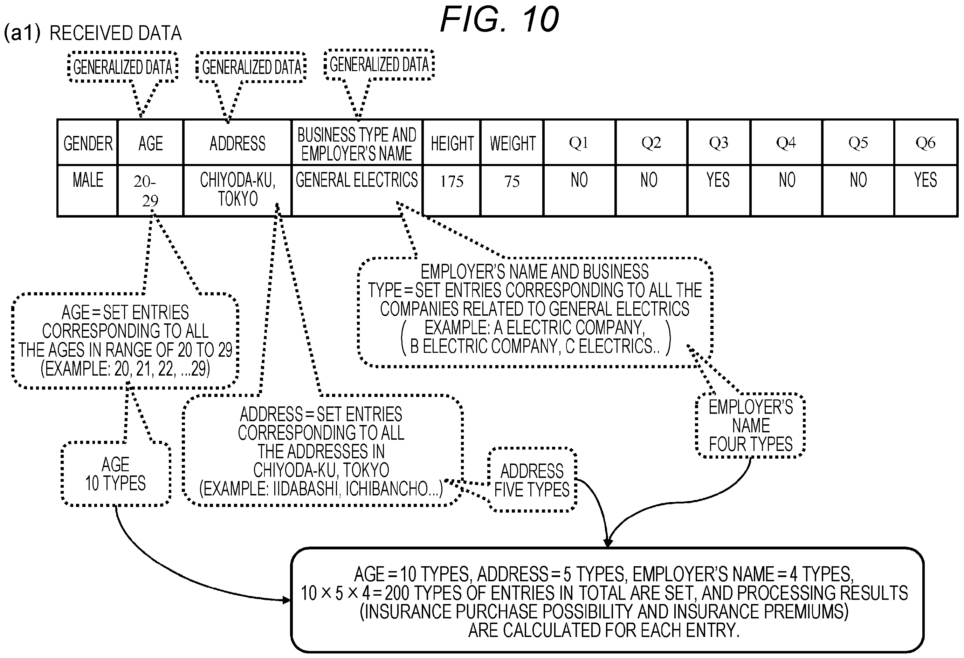

An example of processing executed by the server 20 will be described with reference to Fig. 10 and the subsequent diagrams.

In Fig. 10, an example of the received data received from the user device 10 by the server 20 is illustrated.

The received data is data transmitted to the server 20 by clicking the submit button by the user who has confirmed the transmission information screen described above with reference to Fig. 9.

The received data includes the following data.

Input item (1) gender = male (= input value),
Input item (2) age = 20 to 29 (input value = generalized data of 24),
Input item (3) address = Chiyoda-ku, Tokyo (input value = generalized data of 1020077 2-3-4 Iidabashi, Chiyoda-ku, Tokyo),
Input item (4) employer's name and business type = general electrics (input value = generalized data of A Electric Company and general electrics),
Input item (5) height = 175 (= input value), and
Input item (6) weight = (= input value),

These pieces of basic information and the user input result of the health information described with reference to Fig. 8, that is, the following health information input result forms configuration data of the received data.

Q1 = "No"
Q2 = "No"
Q3 = "Yes"
Q4 = "No"
Q5 = "No"
Q6 = "Yes"

After storing the received data in the database, the server 20 executes the matching calculation based on the received data, in other words, generates the output information to be presented to the user.

As described above, the plurality of parameters, which is the parameter (P1, P2, P3, ...) such as the gender, the age, the address, and the like and that is the input information of the user is input to an algorithm such as a predefined function and the like, and the result is output.

Regarding the generalized data in the received data, individual values included in the generalized data are sequentially applied, and the result is calculated. Note that the results in the present processing example include information used to determine whether or not the user can purchase the insurance and the insurance premiums.

As illustrated in Fig. 10, the generalized data included in the received data includes three pieces of data including

Input item (2) age = 20 to 29 (input value = generalized data of 24),
Input item (3) address = Chiyoda-ku, Tokyo (input value = generalized data of 1020077 2-3-4 Iidabashi, Chiyoda-ku, Tokyo),
Input item (4) employer's name and business type = general electrics (input value = generalized data of A Electric Company and general electrics).

For example, the server 20 sets following parameters to each of the algorithm (function F) used to determine whether or not the user can purchase the insurance and the algorithm (function G) used to calculate the insurance premiums and calculates the result according to each algorithm.

(1) gender = male (= input value), gender parameter = male,
(2) age = 20 to 29 (= generalized data), age parameter = 10 types of parameters i.e., 20, 21, ..., and 29,
(3) address = Chiyoda-ku, Tokyo (= generalized data), parameter = specified address parameter such as Iidabashi, Chiyoda-ku, Tokyo, Ichibancho, Chiyoda-ku, Tokyo, and the like. In the present example, it is assumed that five parameters be used as an address parameter included in Chiyoda-ku, Tokyo.
(4) employer's name and business type = general electrics (= generalized data), parameter = specified company parameter such as A Electric Company, B Electric Company, and the like. In the present example, it is assumed that four types of employer's name parameters be used as an employer's name parameter included in general electrics.
(5) height = 175 (= input value), height parameter = 175,
(6) weight = 75 (= input value), weight parameter = 75,
(health information: Q1 to Q6), answer parameters = No, No, Yes, No, No, Yes

These parameters are input to the algorithm (function F) used to determine whether or not the user can purchase the insurance and the algorithm (function G) used to calculate the insurance premiums, and the results are calculated.

Note that the generalized data included in the received data includes (2) age, (3) employer's name and business type, and (4) address. The number of parameters of these pieces of data is

(2) the number of age parameters = 10,
(3) the number of parameters of employer's name and business type = 5, and

(4) the number of address parameters = 4.

Regarding each of the other input items (1) gender, (5) height, and (6) weight (health information: Q1 to Q6), one piece of data of the user input value can be set as a single parameter.

Therefore, the number of all the parameter combinations is

$$10 \times 5 \times 4 = 200.$$

Under the 200-type parameter setting, the algorithm (function F) used to determine whether or not the user can purchase the insurance and the algorithm (function G) used to calculate the insurance premiums are executed, and 200 types of results (insurance purchase possibility and insurance premiums) are calculated.

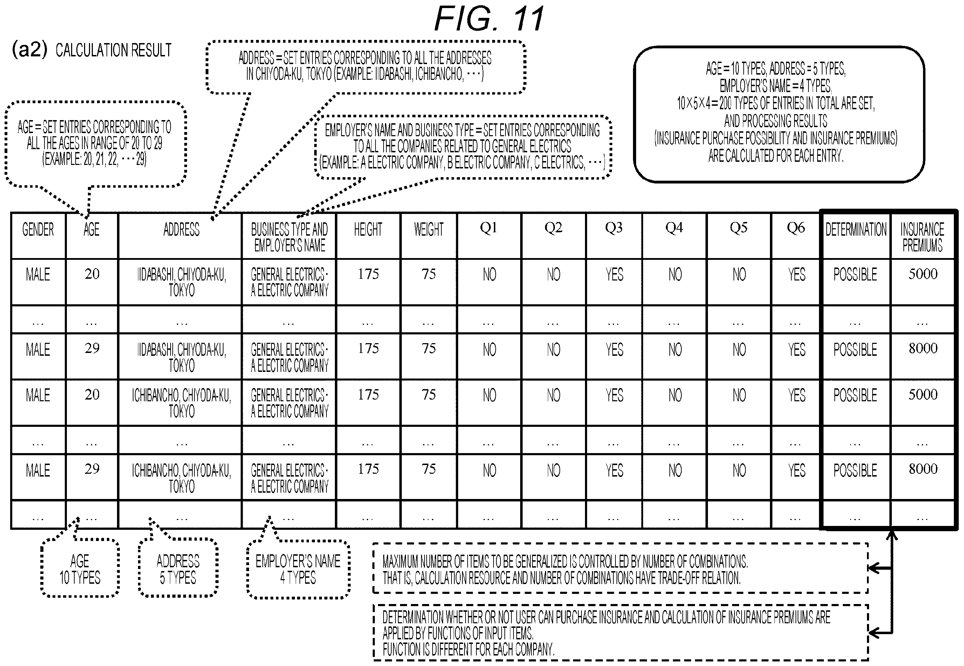

In Fig. 11, an example of the result (matching result) calculated by executing the algorithm (function F) used to determine whether or not the user can purchase the insurance and the algorithm (function G) used to calculate the insurance premiums under the 200-type parameter setting is illustrated.

In Fig. 11, only a part of 200 entries are illustrated.

Two pieces of data [determination] and [insurance premiums] on the right end in the table indicate the results calculated as the algorithm application results, that is, insurance contract availability information and information regarding insurance premiums calculated in a case where the insurance contract is available.

The data [determination] indicates an insurance contract availability result obtained by applying the algorithm (function F) used to determine whether or not the user can purchase the insurance.

The data [insurance premiums] indicates the calculated result of the insurance premiums obtained by applying the algorithm (function G) used to calculate the insurance premiums.

Other pieces of data including [gender] to [weight] to [Q6] other than these two pieces of data [determination] and [insurance premiums] are parameters input to the algorithm (function F) used to determine whether or not the user can purchase the insurance and the algorithm (function G) used to calculate the insurance premiums.

Fig. 11 illustrates only some entries configured by combinations of some parameters. However, as described above, there are 200 types of combinations of the parameters, and 200 entries are set. The results corresponding to the 200 entries (insurance purchase availability and insurance premiums) are obtained.

[3-5. Specific Example of Result Data Transmission Processing from Server to User Device And Data Display on User Device]

Next, a specific example of result data transmission processing from the server to the user device and data display on the user device will be described.

As described with reference to Figs. 10 and 11, the server 20 generates information to be presented to the user by applying all the combinations of the parameters assumed in the received data from the user device 10.

The server 20 transmits the information (calculation result) obtained in this way to the user device 10.

However, in a case where the amount of the transmission data is large, the generated information (calculation result) is compressed, and compressed data is generated and transmitted to the user device 10.

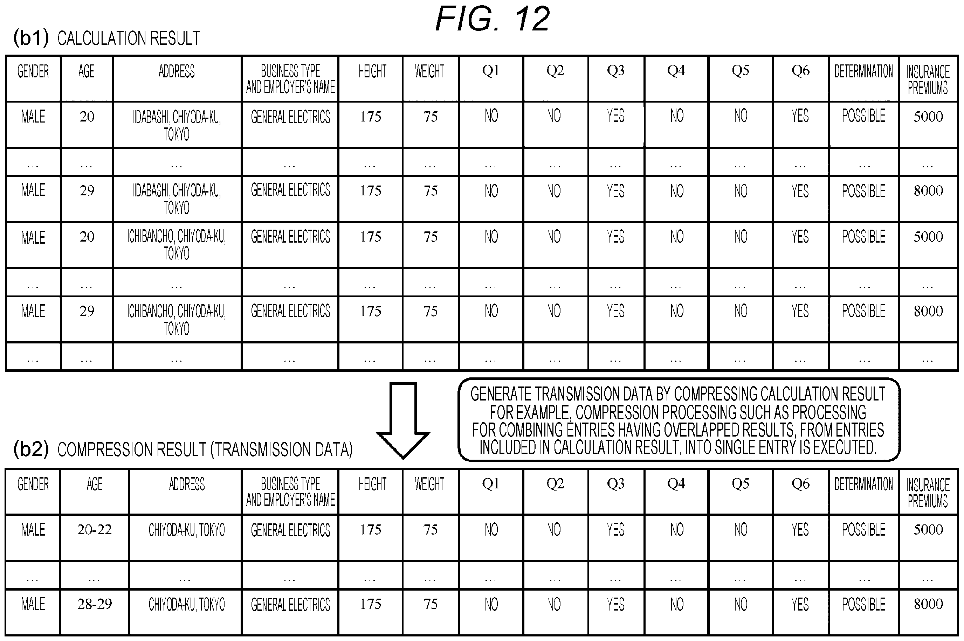

An example of generated information (calculation result) compression processing will be described with reference to Fig. 12.

The calculation result in Fig. 12 (b1) includes data including 200 entries respectively corresponding to the 200 types of combinations of the parameters.

For example, the server 20 executes data compression processing for combining the entries having the same [determination] and the same [insurance premiums] into a single entry on the calculation result.

According to such compression processing, for example, 200 entries can be compressed into 50 entries.

For example, in a first entry of the compression result (transmission data) illustrated in Fig. 12 (b2), the age is set to 20 to 22. This is an entry obtained by combining three different entries, of which only the ages 20, 21, and 22 are different and the other parameters are the same, into a single entry.

In a case where each piece of the data [determination] and [insurance premiums] obtained as algorithm (function) application results in each of the three entries, of which only the ages 20, 21, and 22 are different and the other parameters are the same, coincides, these three entries can be compressed into the single entry.

The server 20 transmits this compressed data to the user device 10 as the transmission data.

This is the transmission of the result in step S109 in the sequence diagram illustrated in Fig. 2.

Next, in step S110 in the sequence diagram illustrated in Fig. 2, the user device 10 displays the result transmitted from the server 10 on the display unit.

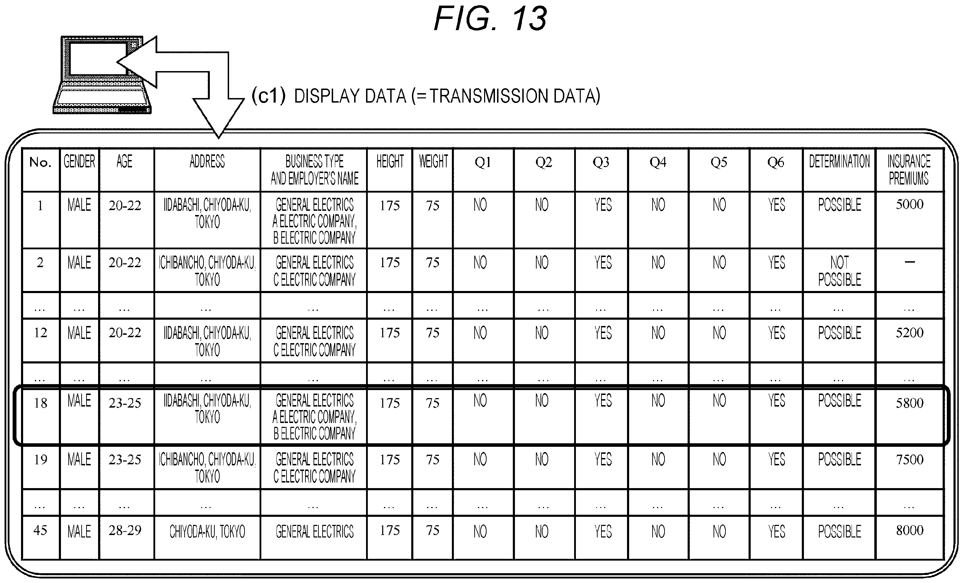

An example of the result data displayed on the display unit of the user device 10 is illustrated in Fig. 13.

The data illustrated in Fig. 13 is the same as the compressed data described above with reference to Fig. 12.

The user of the user device 10 selects an entry that coincides with the one's user information by referring to this result.

In the example illustrated in Fig. 13, an entry No. = 18 is the entry that coincides with the user information.

The user input values described above with reference to Figs. 7 and 8 are as follows.

(1) gender = male,
(2) age = 24,
(3) address = 1020077 2-3-4 Iidabashi, Chiyoda-ku, Tokyo,
(4) employer's name and industry type: A Electric Company, General Electric,
(5) height = 175,
(6) weight = 75,
(health information: Q1 to Q6) answers = No, No, Yes, No, No, Yes

The entry No. = 18 is selected as the entry that coincides with the user information from the result data illustrated in Fig. 13.

As the result data of this entry,
insurance purchase availability determination = available
insurance premiums = 5800

The above settings are made, and the user can surely confirm "insurance purchase availability determination information" and "insurance premiums" having settings that coincide with the user information of the user.

In this way, by applying the processing according to the present disclosure, the user can acquire the data processing result calculated on the basis of the data that coincides with confidential information (secure data) such as user's personal information from a third party without disclosing the confidential information (secure data) such as the personal information that the user requires to keep confidential to the third party.

[4. Exemplary Hardware Configuration of Information Processing Device]

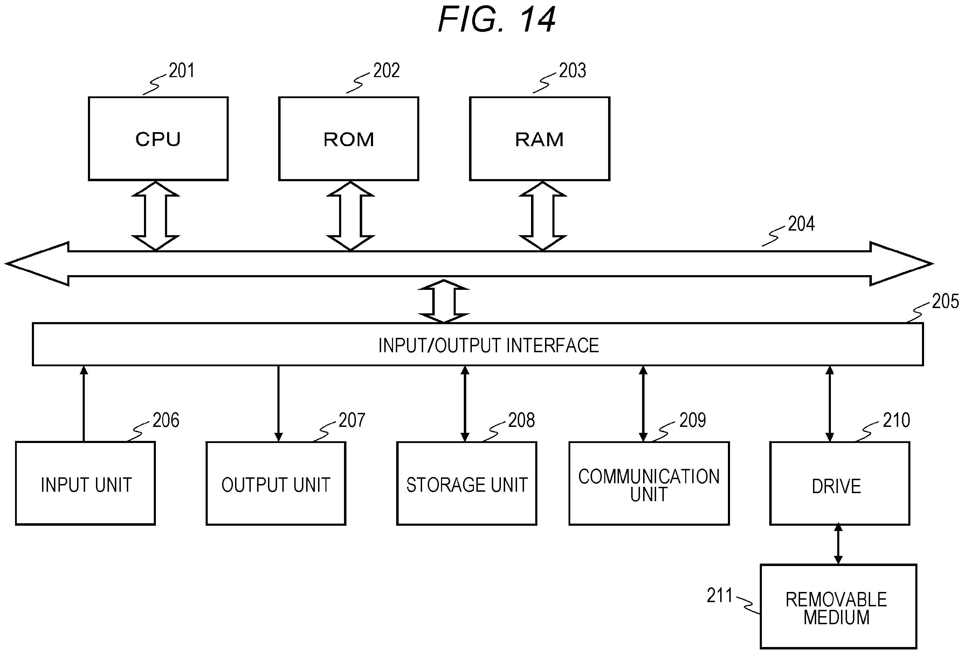

Finally, an exemplary hardware configuration of an information processing device that executes processing according to the above embodiment, that is, an information processing device that can be used as the user device 10 and the server 20 will be described with reference to Fig. 14.

Fig. 14 is a diagram illustrating an exemplary hardware configuration of an information processing device.

A Central Processing Unit (CPU) 201 functions as a control unit and a data processing unit which execute various processing according to a program stored in a Read Only Memory (ROM) 202 or a storage unit 208. For example, processing according to the sequence described in the above embodiment is executed. A Random Access Memory (RAM) 203 stores the program executed by the CPU 201, data, and the like. The CPU 201, the ROM 202, and the RAM 203 are connected to each other by a bus 204.

The CPU 201 is connected to an input/output interface 205 via the bus 204, and the input/output interface 205 is connected to an input unit 206 including various switches, a keyboard, a mouse, a microphone, and the like and an output unit 207 including a display, a speaker, and the like. The CPU 201 executes various processing in response to an instruction input from the input unit 206 and outputs the processing result to, for example, the output unit 207.

The storage unit 208 connected to the input/output interface 25 includes, for example, a hard disk and the like and stores the program executed by the CPU 201 and various data. A communication unit 209 functions as a transceiver for data communication via a network such as the Internet and a local area network and communicates with external devices.

A drive 210 connected to the input/output interface 205 drives a removable medium 211 such as a magnetic disk, an optical disk, a magneto-optical disk, or a semiconductor memory such as a memory card and records or reads data.

[5. Summary of Configuration of Present Disclosure]

The embodiment of the present disclosure has been described in detail with reference to the specific embodiment above. However, it is obvious that those skilled in the art can make modifications and substitutions of the embodiments without departing from the gist of the present disclosure. In other words, the present invention has been disclosed in a form of exemplification and is not restrictively interpreted. Claims should be considered in order to determine the gist of the present disclosure.

Note that the technology disclosed in the present specification can have the following configuration.

(1) An information processing device including:

a generalization processing unit configured to execute generalization processing for converting input data into generalized data including the input data and data other than the input data as concealment processing of the input data; and a communication unit configured to transmit the generalized data on which the generalization processing is executed by the generalization processing unit.

(2) The information processing device according to (1), in which
the generalization processing unit
executes the generalization processing for converting the input data into generalized data including data other than the input data in a predetermined range according to a type of the input data.
(3) The information processing device according to (1) or (2), in which

the generalization processing unit,
in a case where the input data includes numerical data, executes generalization processing for converting the input data into generalized numerical data including input numerical data and other numerical data.
(4) The information processing device according to any one of (1) to (3), in which
the generalization processing unit,
in a case where the input data includes positional data, executes generalization processing for converting the input data into generalized positional data including input positional data and other positional data.
(5) The information processing device according to any one of (1) to (4), in which
the generalization processing unit
selects input data in which specification information for requesting generalization processing is input to a generalization request specification portion associated with the input data and executes generalization processing on the selected data.
(6) The information processing device according to any one of (1) to (5), in which
data on which the generalization processing is executed includes personal information.
(7) The information processing device according to any one of (1) to (6), further including:

a display unit configured to display an input form used to perform input processing on the input data, in which
the display unit
displays an input form that includes an input value entry portion corresponding to an input item and the generalization request specification portion associated with the input value entry portion.

(8) An information processing device including:

a data processing unit configured to
input generalized data including user input data and data other than the user input data,
develop the generalized data to a plurality of pieces of individual data including the user input data and the data other than the user input data, and
execute data processing to which each of the plurality of pieces of individual data is applied and calculate a data processing result corresponding to each piece of the individual data.

(9) The information processing device according to (8), further including:

a communication unit configured to receive the generalized data, in which
the data processing unit transmits the calculated data processing result to a transmission device of the generalized data via the communication unit.

(10) The information processing device according to (8) or (9), in which
the data processing unit
classifies generalized numerical data into a plurality of different pieces of individual numerical data in a case where input generalized data includes the generalized numerical data, and
executes data processing to which each of the plurality of different pieces of classified individual numerical data is applied and calculates a data processing result corresponding to each piece of the individual numerical data.

(11) The information processing device according to any one of (8) to (10), in which
the data processing unit
classifies generalized positional data into a plurality of different pieces of individual positional data in a case where input generalized data includes the generalized positional data, and
executes data processing to which each of the plurality of different pieces of classified individual positional data is applied and calculates a data processing result corresponding to each piece of the individual positional data.

(12) The information processing device according to any one of (8) to (11), in which
the user input data includes
a plurality of pieces of item correspondence user input data corresponding to a plurality of input items, and
the data processing unit
inputs mixed data including the item correspondence user input data corresponding to some items and item correspondence generalized data corresponding to other items,
classifies each piece of the item correspondence generalized data into a plurality of pieces of item correspondence individual data including the user input data and the data other than the user input data, and
executes data processing to which each of the plurality of pieces of item correspondence individual data is applied and calculates a data processing result corresponding to each piece of the item correspondence individual data.

(13) The information processing device according to any one of (8) to (12), in which
the data processing unit
has a configuration that executes processing for transmitting an input form used to perform input processing on the input data to a transmission device of the generalized data, and
the input form has
a configuration including an input value entry portion corresponding to the input item and a generalization request specification portion associated with the input value entry portion.

(14) An information processing system including:

a user device configured to transmit concealment data of user input data; and
a server configured to execute data processing based on received data from the user device and return a processing result to the user device, in which
the user device
executes generalization processing for converting input data into generalized data including the input data and data other than the input data as concealment processing of the input data and transmits the converted data to the server, and
the server
inputs the generalized data and classifies the generalized data into a plurality of pieces of individual data including the user input data and data other than the user input data, and
executes data processing to which each of the plurality of pieces of individual data is applied, calculates a data processing result corresponding to each piece of the individual data, and returns the result to the user device.

(15) An information processing method executed by an information processing device, in which
a generalization processing unit executes generalization processing for converting input data into generalized data including the input data and data other than the input data as concealment processing of the input data, and
a communication unit transmits the generalized data.

(16) An information processing method executed by an information processing device, in which
a data processing unit of the information processing device
inputs generalized data including user input data and data other than the user input data,
develops the generalized data to a plurality of pieces of individual data including the user input data and the data other than the user input data, and
executes data processing to which each of the plurality of pieces of individual data is applied and calculates a data processing result corresponding to each piece of the individual data.

(17) A program for causing an information processing device to execute information processing, in which
the program causes a generalization processing unit to execute generalization processing for converting input data into generalized data including the input data and data other than the input data as concealment processing of the input data, and
causes a communication unit to transmit the generalized data.

(18) A program for causing an information processing device to execute information processing, in which

the program causes a data processing unit of the information processing device to execute

processing for inputting generalized data including user input data and data other than the user input data,

processing for developing the generalized data to a plurality of pieces of individual data including the user input data and the data other than the user input data, and

processing for executing data processing to which each of the plurality of pieces of individual data is applied and calculating a data processing result corresponding to each piece of the individual data.

Furthermore, the series of processing described in the specification can be executed by hardware, software, or a composite configuration of the hardware and the software. In a case where the processing is executed by the software, it is possible that a program in which a processing sequence has been recorded is installed in a memory, which is built in dedicated hardware, in a computer and executed or the program is installed in a general computer which can execute various processing and executed. For example, the program can be recorded in a recording medium in advance. In addition to installing the program from the recording medium to the computer, it is possible that the program is received via a network such as a Local Area Network (LAN) and the Internet and installed to a recording medium such as a built-in hard disk.

Note that various processing described in the present specification is not only executed in time series according to the description, and may be executed in parallel or individually according to a processing capability of an apparatus for executing the processing or as necessity. Furthermore, in the present specification, the system is a logical group configuration of a plurality of devices, and the devices of the configuration are not limited to be housed in the same casing.

INDUSTRIAL APPLICABILITY

According to a configuration of an embodiment of the present disclosure, a configuration is realized that can calculate a data processing result by using confidential information and can present the processing result without disclosing the confidential information such as personal information and the like.

Specifically, for example, a user device that transmits concealment data of user input data and a server that executes data processing based on received data from the user device are provided. The user device executes data generalization processing for converting the input data into generalized data including the input data and data other than the input data as concealment processing of the input data and transmits the generalized data to the server. The server develops the input generalized data into a plurality of pieces of individual data including the user input data, executes data processing to which each of the plurality of pieces of data is applied, calculates a data processing result corresponding to each piece of the individual data, and returns the result to the user device.

According to this configuration, a configuration is realized that can calculate a data processing result by using confidential information and can present the processing result without disclosing the confidential information such as personal information and the like.

REFERENCE SIGNS LIST

| | |
|---|---|
| 10 | User device |
| 20 | Server |
| 201 | CPU |
| 202 | ROM |
| 203 | RAM |
| 204 | Bus |
| 205 | Input/output interface |
| 206 | Input unit |
| 207 | Output unit |
| 208 | Storage unit |
| 209 | Communication unit |
| 210 | Drive |
| 211 | Removable medium |

**Claims**

1. An information processing device comprising:

   a generalization processing unit configured to execute generalization processing for converting input data into generalized data including the input data and data other than the input data as concealment processing of the input data; and
   a communication unit configured to transmit the generalized data on which the generalization processing is executed by the generalization processing unit.

2. The information processing device according to claim 1, wherein
   the generalization processing unit
   executes the generalization processing for converting the input data into generalized data including data other than the input data in a predetermined range according to a type of the input data.

3. The information processing device according to claim 1, wherein

the generalization processing unit,
in a case where the input data includes numerical data, executes generalization processing for converting the input data into generalized numerical data including input numerical data and other numerical data.

4. The information processing device according to claim 1, wherein
the generalization processing unit,
in a case where the input data includes positional data, executes generalization processing for converting the input data into generalized positional data including input positional data and other positional data.

5. The information processing device according to claim 1, wherein
the generalization processing unit
selects input data in which specification information for requesting generalization processing is input to a generalization request specification portion associated with the input data and executes generalization processing on the selected data.

6. The information processing device according to claim 1, wherein
data on which the generalization processing is executed includes personal information.

7. The information processing device according to claim 1, further comprising:

   a display unit configured to display an input form used to perform input processing on the input data, wherein
   the display unit
   displays an input form that includes an input value entry portion corresponding to an input item and a generalization request specification portion associated with the input value entry portion.

8. An information processing device comprising:

   a data processing unit configured to
   input generalized data including user input data and data other than the user input data,
   develop the generalized data to a plurality of pieces of individual data including the user input data and the data other than the user input data, and
   execute data processing to which each of the plurality of pieces of individual data is applied and calculate a data processing result corresponding to each piece of the individual data.

9. The information processing device according to claim 8, further comprising:

a communication unit configured to receive the generalized data, wherein
the data processing unit transmits the calculated data processing result to a transmission device of the generalized data via the communication unit.

10. The information processing device according to claim 8, wherein
the data processing unit
classifies generalized numerical data into a plurality of different pieces of individual numerical data in a case where input generalized data includes the generalized numerical data, and
executes data processing to which each of the plurality of different pieces of classified individual numerical data is applied and calculates a data processing result corresponding to each piece of the individual numerical data.

11. The information processing device according to claim 8, wherein
the data processing unit
classifies generalized positional data into a plurality of different pieces of individual positional data in a case where input generalized data includes the generalized positional data, and
executes data processing to which each of the plurality of different pieces of classified individual positional data is applied and calculates a data processing result corresponding to each piece of the individual positional data.

12. The information processing device according to claim 8, wherein
the user input data includes
a plurality of pieces of item correspondence user input data corresponding to a plurality of input items, and
the data processing unit
inputs mixed data including the item correspondence user input data corresponding to some items and item correspondence generalized data corresponding to other items,
classifies each piece of the item correspondence generalized data into a plurality of pieces of item correspondence individual data including the user input data and the data other than the user input data, and
executes data processing to which each of the plurality of pieces of item correspondence individual data is applied and calculates a data processing result corresponding to each piece of the item correspondence individual data.

13. The information processing device according to claim 8, wherein
the data processing unit
has a configuration that executes processing for transmitting an input form used to perform input processing on the input data to a transmission device of the generalized data, and
the input form has
a configuration including an input value entry portion corresponding to an input item and a generalization request specification portion associated with the input value entry portion.

**14.** An information processing system comprising:

a user device configured to transmit concealment data of user input data; and
a server configured to execute data processing based on received data from the user device and return a processing result to the user device, wherein
the user device
executes generalization processing for converting input data into generalized data including the input data and data other than the input data as concealment processing of the input data and transmits the converted data to the server, and
the server
inputs the generalized data and classifies the generalized data into a plurality of pieces of individual data including the user input data and data other than the user input data, and executes data processing to which each of the plurality of pieces of individual data is applied, calculates a data processing result corresponding to each piece of the individual data, and returns the result to the user device.

**15.** An information processing method executed by an information processing device, wherein
a generalization processing unit executes generalization processing for converting input data into generalized data including the input data and data other than the input data as concealment processing of the input data, and
a communication unit transmits the generalized data.

**16.** An information processing method executed by an information processing device, wherein
a data processing unit of the information processing device
inputs generalized data including user input data and data other than the user input data,
develops the generalized data to a plurality of pieces of individual data including the user input data and the data other than the user input data, and
executes data processing to which each of the plurality of pieces of individual data is applied and calculates a data processing result corresponding to each piece of the individual data.

**17.** A program for causing an information processing device to execute information processing, wherein
the program causes a generalization processing unit to execute generalization processing for converting input data into generalized data including the input data and data other than the input data as concealment processing of the input data, and
causes a communication unit to transmit the generalized data.

**18.** A program for causing an information processing device to execute information processing, wherein
the program causes a data processing unit of the information processing device to execute
processing for inputting generalized data including user input data and data other than the user input data,
processing for developing the generalized data to a plurality of pieces of individual data including the user input data and the data other than the user input data, and
processing for executing data processing to which each of the plurality of pieces of individual data is applied and calculating a data processing result corresponding to each piece of the individual data.

FIG. 1

# FIG. 2

USER DEVICE ~10

SERVER ~20

S101 REQUEST SERVICE

S102 TRANSMIT INPUT FORM

S103 USER INFORMATION INPUT

S104 SELECT GENERALIZED ITEM

S105 GENERALIZE INFORMATION

S106 USER INFORMATION INCLUDING GENERALIZED DATA

S107 (STORE IN DATABASE)

S108 MATCHING CALCULATION

S109 TRANSMIT RESULT

S110 DISPLAY CORRESPONDING RESULT

EP 3 651 047 A1

# FIG. 3

INFORMATION INPUT FORM (1/2) (BASIC INFORMATION INPUT PAGE) | RETURN | NEXT

GENERALIZATION REQUEST □

**ABOUT GENERALIZATION REQUEST,**
GENERALIZATION IS PROCESSING FOR CONVERTING INTO DATA IN PREDETERMINED RANGE INCLUDING INPUT VALUE (GENERALIZED DATA) AND TRANSMITTING GENERALIZED DATA WITHOUT TRANSMITTING INPUT VALUE. IN A CASE WHERE GENERALIZATION PROCESSING IS DESIRED, PLEASE CHECK THIS BOX.
(SEE DETAILS FROM HERE ⇨ **GENERALIZATION PROCESSING EXAMPLE**)

(1) GENDER:   MALE ○   FEMALE ○

(2) AGE: [          ⬍] YEARS OLD □

(3) ADDRESS:

ZIP CODE
[                    ]

PREFECTURE
[                  ⬍]

CITY
[                    ]   □

FOLLOWING ADDRESS
[                    ]

(4a) EMPLOYER'S NAME: [                    ]   □

(4b) BUSINESS TYPE: [                  ⬍]

(5) HEIGHT: [                ]   □

(6) WEIGHT: [                ]   □

EP 3 651 047 A1

# FIG. 4

INFORMATION INPUT FORM (2/2) (HEALTH INFORMATION INPUT PAGE) | RETURN | NEXT

Q1: HAVE YOU EVER SEEN DOCTOR, OR EXAMINED, TREATED, OR MEDICATED BY DOCTOR WITHIN LAST THREE MONTHS?

YES ○          NO ○

Q2: HAVE YOU EVER HAD SURGERY FOR ILLNESS OR INJURY WITHIN PAST FIVE YEARS?

YES ○          NO ○

Q3: HAVE YOU EVER BEEN HOSPITALIZED FOR MORE THAN SEVEN DAYS DUE TO ILLNESS OR INJURY WITHIN PAST FIVE YEARS?

YES ○          NO ○

Q4: HAVE YOU EVER RECEIVED MEDICAL EXAMINATION, TREATMENT, OR MEDICATION BY DOCTOR FOR DISEASE (DISEASE DESCRIBED IN NOTICE SPECIFIED BY INSURANCE COMPANY SUCH AS CANCER, DIABETES, AND CIRRHOSIS) WITHIN PAST FIVE YEARS?

YES ○          NO ○

Q5: HAVE YOU HAVE MEDICAL EXAMINATION OR COMPLETE MEDICAL CHECKUP AND BEEN INFORMED ABNORMALITIES (INCLUDING REQUIREMENTS FOR RE-EXAMINATION, DETAILED INSPECTION, TREATMENT, FOLLOW-UP) WITHIN PAST TWO YEARS?

YES ○          NO ○

Q6: DO YOU HAVE ANY DISORDER IN VISUAL ACUITY, HEARING, LANGUAGE, OR MASTICATORY FUNCTION? DO YOU HAVE ANY DEFECTS OR DYSFUNCTIONS IN HANDS, FEET, OR FINGERS? DO YOU HAVE DEFORMITY OR DISORDER IN SPINE?

YES ○          NO ○

## FIG. 5

GENERALIZATION PROCESSING DATA EXAMPLE (1/2)  [RETURN] [NEXT]

| (1) | GENERALIZATION PROCESSING EXAMPLE OF GENDER | 1 (GENERALIZATION) / 0 (INPUT VALUE) | UNKNOWN / MALE  FEMALE |
| (2) | GENERALIZATION PROCESSING EXAMPLE OF AGE | 1 (GENERALIZATION) / 0 (INPUT VALUE) | [0, 9] [10, 19] [20, 29] [30, 39] [40, 49] … / 0 1 2 3 4 5 6 7 8 9 10 … |
| (3) | GENERALIZATION PROCESSING EXAMPLE OF ADDRESS | 1 (GENERALIZATION) / 0 (INPUT VALUE) | CHIYODA-KU, TOKYO … / IIDABASHI  ICHIBANCHO  IWAMOTOCHO … |

EP 3 651 047 A1

# FIG. 6

GENERALIZATION PROCESSING DATA EXAMPLE (2/2) | RETURN | NEXT

| (4) | GENERALIZATION PROCESSING EXAMPLE OF EMPLOYER'S NAME | 1 (GENERALIZATION) / 0 (INPUT VALUE): GENERAL ELECTRICS — A ELECTRIC COMPANY, ○○, ×× ; FINANCE — B BANK, △△, □□ ; ... |
| (5) | GENERALIZATION PROCESSING EXAMPLE OF HEIGHT | (cm) 1 (GENERALIZATION) / 0 (INPUT VALUE): [0, 99] 0 ... 99 ; [100, 149] 100 ... 149 ; [150, 169] 150 ... 169 ; [170, 199] 170 ... 199 ... |
| (6) | GENERALIZATION PROCESSING EXAMPLE OF WEIGHT | (Kg) 1 (GENERALIZATION) / 0 (INPUT VALUE): [0, 29] 0 ... 29 ; [30, 49] 30 ... 49 ; [50, 69] 50 ... 69 ; [70, 99] 70 ... 99 ... |

# FIG. 7

INFORMATION INPUT FORM (1/2) (BASIC INFORMATION INPUT PAGE) [RETURN] [NEXT]

GENERALIZATION REQUEST

**ABOUT GENERALIZATION REQUEST,**
GENERALIZATION IS PROCESSING FOR CONVERTING INTO DATA IN PREDETERMINED RANGE INCLUDING INPUT VALUE (GENERALIZED DATA) AND TRANSMITTING GENERALIZED DATA WITHOUT TRANSMITTING INPUT VALUE. IN A CASE WHERE GENERALIZATION PROCESSING IS DESIRED, PLEASE CHECK THIS BOX.
(SEE DETAILS FROM HERE ⇨ GENERALIZATION PROCESSING EXAMPLE)

(1) GENDER: MALE ● FEMALE ○ ☐

(2) AGE: [ 24 ] ☑
YEARS OLD

(3) ADDRESS:

ZIP CODE
[ 1020077 ]

PREFECTURE
[ TOKYO ]

CITY
[ CHIYODA-KU ]

FOLLOWING ADDRESS
[ 2-3-4 IIDABASHI ]

☑

(4a) EMPLOYER'S NAME: [ A ELECTRIC COMPANY ]

(4b) BUSINESS TYPE: [ GENERAL ELECTRICS ] ☑

(5) HEIGHT: [ 175 ] ☐

(6) WEIGHT: [ 75 ] ☐

EP 3 651 047 A1

# FIG. 8

INFORMATION INPUT FORM (2/2) (HEALTH INFORMATION INPUT PAGE) [RETURN] [NEXT]

Q1: HAVE YOU EVER SEEN DOCTOR, OR EXAMINED, TREATED, OR MEDICATED BY DOCTOR WITHIN LAST THREE MONTHS?

    YES ○      NO ◉

Q2: HAVE YOU EVER HAD SURGERY FOR ILLNESS OR INJURY WITHIN PAST FIVE YEARS?

    YES ○      NO ◉

Q3: HAVE YOU EVER BEEN HOSPITALIZED FOR MORE THAN SEVEN DAYS DUE TO ILLNESS OR INJURY WITHIN PAST FIVE YEARS?

    YES ◉      NO ○

Q4: HAVE YOU EVER RECEIVED MEDICAL EXAMINATION, TREATMENT, OR MEDICATION BY DOCTOR FOR DISEASE (DISEASE DESCRIBED IN NOTICE SPECIFIED BY INSURANCE COMPANY SUCH AS CANCER, DIABETES, AND CIRRHOSIS) WITHIN PAST FIVE YEARS?

    YES ○      NO ◉

Q5: HAVE YOU HAVE MEDICAL EXAMINATION OR COMPLETE MEDICAL CHECKUP AND BEEN INFORMED ABNORMALITIES (INCLUDING REQUIREMENTS FOR RE-EXAMINATION, DETAILED INSPECTION, TREATMENT, FOLLOW-UP) WITHIN PAST TWO YEARS?

    YES ○      NO ◉

Q6: DO YOU HAVE ANY DISORDER IN VISUAL ACUITY, HEARING, LANGUAGE, OR MASTICATORY FUNCTION? DO YOU HAVE ANY DEFECTS OR DYSFUNCTIONS IN HANDS, FEET, OR FINGERS? DO YOU HAVE DEFORMITY OR DISORDER IN SPINE?

    YES ◉      NO ○

EP 3 651 047 A1

# FIG. 9

BASIC INFORMATION TO BE TRANSMITTED (FOLLOWING BASIC INFORMATION IS TRANSMITTED TOGETHER WITH INPUT HEALTH INFORMATION. PLEASE CLICK SUBMIT BUTTON IF YOU AGREE)    RETURN

GENERALIZATION REQUEST

(1) GENDER:  MALE ◉  FEMALE ○    ☐

(2) AGE:  20−29 ⇕ YEARS OLD ☑

(3) ADDRESS:

ZIP CODE
1020077

PREFECTURE
TOKYO ⇕

CITY
CHIYODA-KU

FOLLOWING ADDRESS
—

☑

(4a) EMPLOYER'S NAME:  A ELECTRIC COMPANY

(4b) BUSINESS TYPE:  GENERAL ELECTRICS ⇕

☑

(5) HEIGHT:  175    ☐

(6) WEIGHT:  75    ☐

SUBMIT

EP 3 651 047 A1

# FIG. 10

(a1) RECEIVED DATA

GENERALIZED DATA    GENERALIZED DATA    GENERALIZED DATA

| GENDER | AGE | ADDRESS | BUSINESS TYPE AND EMPLOYER'S NAME | HEIGHT | WEIGHT | Q1 | Q2 | Q3 | Q4 | Q5 | Q6 |
|---|---|---|---|---|---|---|---|---|---|---|---|
| MALE | 20-29 | CHIYODA-KU, TOKYO | GENERAL ELECTRICS | 175 | 75 | NO | NO | YES | NO | NO | YES |

AGE = SET ENTRIES CORRESPONDING TO ALL THE AGES IN RANGE OF 20 TO 29 (EXAMPLE: 20, 21, 22, ...29)

EMPLOYER'S NAME AND BUSINESS TYPE = SET ENTRIES CORRESPONDING TO ALL THE COMPANIES RELATED TO GENERAL ELECTRICS ( EXAMPLE: A ELECTRIC COMPANY, B ELECTRIC COMPANY, C ELECTRICS.. )

ADDRESS = SET ENTRIES CORRESPONDING TO ALL THE ADDRESSES IN CHIYODA-KU, TOKYO (EXAMPLE: IIDABASHI, ICHIBANCHO...)

EMPLOYER'S NAME FOUR TYPES

AGE 10 TYPES

ADDRESS FIVE TYPES

AGE = 10 TYPES, ADDRESS = 5 TYPES, EMPLOYER'S NAME = 4 TYPES, 10 × 5 × 4 = 200 TYPES OF ENTRIES IN TOTAL ARE SET, AND PROCESSING RESULTS (INSURANCE PURCHASE POSSIBILITY AND INSURANCE PREMIUMS) ARE CALCULATED FOR EACH ENTRY.

EP 3 651 047 A1

# FIG. 11

**(a2) CALCULATION RESULT**

ADDRESS = SET ENTRIES CORRESPONDING TO ALL THE ADDRESSES IN CHIYODA-KU, TOKYO (EXAMPLE: IIDABASHI, ICHIBANCHO, ···)

AGE = SET ENTRIES CORRESPONDING TO ALL THE AGES IN RANGE OF 20 TO 29 (EXAMPLE: 20, 21, 22, ··· 29)

EMPLOYER'S NAME AND BUSINESS TYPE = SET ENTRIES CORRESPONDING TO ALL THE COMPANIES RELATED TO GENERAL ELECTRICS (EXAMPLE: A ELECTRIC COMPANY, B ELECTRIC COMPANY, C ELECTRICS, ···)

AGE = 10 TYPES, ADDRESS = 5 TYPES, EMPLOYER'S NAME = 4 TYPES, 10×5×4 = 200 TYPES OF ENTRIES IN TOTAL ARE SET, AND PROCESSING RESULTS (INSURANCE PURCHASE POSSIBILITY AND INSURANCE PREMIUMS) ARE CALCULATED FOR EACH ENTRY.

| GENDER | AGE | ADDRESS | BUSINESS TYPE AND EMPLOYER'S NAME | HEIGHT | WEIGHT | Q1 | Q2 | Q3 | Q4 | Q5 | Q6 | DETERMINATION | INSURANCE PREMIUMS |
|---|---|---|---|---|---|---|---|---|---|---|---|---|---|
| MALE | 20 | IIDABASHI, CHIYODA-KU, TOKYO | GENERAL ELECTRICS· A ELECTRIC COMPANY | 175 | 75 | NO | NO | YES | NO | NO | YES | POSSIBLE | 5000 |
| ... | ... | ... | ... | ... | ... | ... | ... | ... | ... | ... | ... | ... | ... |
| MALE | 29 | IIDABASHI, CHIYODA-KU, TOKYO | GENERAL ELECTRICS· A ELECTRIC COMPANY | 175 | 75 | NO | NO | YES | NO | NO | YES | POSSIBLE | 8000 |
| MALE | 20 | ICHIBANCHO, CHIYODA-KU, TOKYO | GENERAL ELECTRICS· A ELECTRIC COMPANY | 175 | 75 | NO | NO | YES | NO | NO | YES | POSSIBLE | 5000 |
| ... | ... | ... | ... | ... | ... | ... | ... | ... | ... | ... | ... | ... | ... |
| MALE | 29 | ICHIBANCHO, CHIYODA-KU, TOKYO | GENERAL ELECTRICS· A ELECTRIC COMPANY | 175 | 75 | NO | NO | YES | NO | NO | YES | POSSIBLE | 8000 |
| ... | ... | ... | ... | ... | ... | ... | ... | ... | ... | ... | ... | ... | ... |

AGE 10 TYPES

ADDRESS 5 TYPES

EMPLOYER'S NAME 4 TYPES

MAXIMUM NUMBER OF ITEMS TO BE GENERALIZED IS CONTROLLED BY NUMBER OF COMBINATIONS. THAT IS, CALCULATION RESOURCE AND NUMBER OF COMBINATIONS HAVE TRADE-OFF RELATION.

DETERMINATION WHETHER OR NOT USER CAN PURCHASE INSURANCE AND CALCULATION OF INSURANCE PREMIUMS ARE APPLIED BY FUNCTIONS OF INPUT ITEMS. FUNCTION IS DIFFERENT FOR EACH COMPANY.

EP 3 651 047 A1

# FIG. 12

**(b1)** CALCULATION RESULT

| GENDER | AGE | ADDRESS | BUSINESS TYPE AND EMPLOYER'S NAME | HEIGHT | WEIGHT | Q1 | Q2 | Q3 | Q4 | Q5 | Q6 | DETERMINATION | INSURANCE PREMIUMS |
|---|---|---|---|---|---|---|---|---|---|---|---|---|---|
| MALE | 20 | IIDABASHI, CHIYODA-KU, TOKYO | GENERAL ELECTRICS | 175 | 75 | NO | NO | YES | NO | NO | YES | POSSIBLE | 5000 |
| ... | ... | ... | ... | ... | ... | ... | ... | ... | ... | ... | ... | ... | ... |
| MALE | 29 | IIDABASHI, CHIYODA-KU, TOKYO | GENERAL ELECTRICS | 175 | 75 | NO | NO | YES | NO | NO | YES | POSSIBLE | 8000 |
| MALE | 20 | ICHIBANCHO, CHIYODA-KU, TOKYO | GENERAL ELECTRICS | 175 | 75 | NO | NO | YES | NO | NO | YES | POSSIBLE | 5000 |
| ... | ... | ... | ... | ... | ... | ... | ... | ... | ... | ... | ... | ... | ... |
| MALE | 29 | ICHIBANCHO, CHIYODA-KU, TOKYO | GENERAL ELECTRICS | 175 | 75 | NO | NO | YES | NO | NO | YES | POSSIBLE | 8000 |
| ... | ... | ... | ... | ... | ... | ... | ... | ... | ... | ... | ... | ... | ... |

GENERATE TRANSMISSION DATA BY COMPRESSING CALCULATION RESULT FOR EXAMPLE, COMPRESSION PROCESSING SUCH AS PROCESSING FOR COMBINING ENTRIES HAVING OVERLAPPED RESULTS, FROM ENTRIES INCLUDED IN CALCULATION RESULT, INTO SINGLE ENTRY IS EXECUTED.

**(b2)** COMPRESSION RESULT (TRANSMISSION DATA)

| GENDER | AGE | ADDRESS | BUSINESS TYPE AND EMPLOYER'S NAME | HEIGHT | WEIGHT | Q1 | Q2 | Q3 | Q4 | Q5 | Q6 | DETERMINATION | INSURANCE PREMIUMS |
|---|---|---|---|---|---|---|---|---|---|---|---|---|---|
| MALE | 20-22 | CHIYODA-KU, TOKYO | GENERAL ELECTRICS | 175 | 75 | NO | NO | YES | NO | NO | YES | POSSIBLE | 5000 |
| ... | ... | ... | ... | ... | ... | ... | ... | ... | ... | ... | ... | ... | ... |
| MALE | 28-29 | CHIYODA-KU, TOKYO | GENERAL ELECTRICS | 175 | 75 | NO | NO | YES | NO | NO | YES | POSSIBLE | 8000 |

EP 3 651 047 A1

# FIG. 13

**(c1)** DISPLAY DATA (= TRANSMISSION DATA)

| No. | GENDER | AGE | ADDRESS | BUSINESS TYPE AND EMPLOYER'S NAME | HEIGHT | WEIGHT | Q1 | Q2 | Q3 | Q4 | Q5 | Q6 | DETERMINATION | INSURANCE PREMIUMS |
|---|---|---|---|---|---|---|---|---|---|---|---|---|---|---|
| 1 | MALE | 20-22 | IIDABASHI, CHIYODA-KU, TOKYO | GENERAL ELECTRICS A ELECTRIC COMPANY, B ELECTRIC COMPANY | 175 | 75 | NO | NO | YES | NO | NO | YES | POSSIBLE | 5000 |
| 2 | MALE | 20-22 | ICHIBANCHO, CHIYODA-KU, TOKYO | GENERAL ELECTRICS C ELECTRIC COMPANY | 175 | 75 | NO | NO | YES | NO | NO | YES | NOT POSSIBLE | — |
| ... | ... | ... | ... | ... | ... | ... | ... | ... | ... | ... | ... | ... | ... | ... |
| 12 | MALE | 20-22 | IIDABASHI, CHIYODA-KU, TOKYO | GENERAL ELECTRICS C ELECTRIC COMPANY | 175 | 75 | NO | NO | YES | NO | NO | YES | POSSIBLE | 5200 |
| ... | ... | ... | ... | ... | ... | ... | ... | ... | ... | ... | ... | ... | ... | ... |
| 18 | MALE | 23-25 | IIDABASHI, CHIYODA-KU, TOKYO | GENERAL ELECTRICS A ELECTRIC COMPANY, B ELECTRIC COMPANY | 175 | 75 | NO | NO | YES | NO | NO | YES | POSSIBLE | 5800 |
| 19 | MALE | 23-25 | ICHIBANCHO, CHIYODA-KU, TOKYO | GENERAL ELECTRICS C ELECTRIC COMPANY | 175 | 75 | NO | NO | YES | NO | NO | YES | POSSIBLE | 7500 |
| ... | ... | ... | ... | ... | ... | ... | ... | ... | ... | ... | ... | ... | ... | ... |
| 45 | MALE | 28-29 | CHIYODA-KU, TOKYO | GENERAL ELECTRICS | 175 | 75 | NO | NO | YES | NO | NO | YES | POSSIBLE | 8000 |

EP 3 651 047 A1

## FIG. 14

## INTERNATIONAL SEARCH REPORT

| | International application No. |
|---|---|
| | PCT/JP2018/023950 |

A. CLASSIFICATION OF SUBJECT MATTER
Int.Cl. G06F21/62(2013.01)i

According to International Patent Classification (IPC) or to both national classification and IPC

B. FIELDS SEARCHED

Minimum documentation searched (classification system followed by classification symbols)
Int.Cl. G06F21/62, G06F17/30, G06Q50/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2008/108158 A1 (NEC CORPORATION) 12 September 2008, paragraphs [0011]–[0037], [0075], [0076], | 1, 4, 6, 15, 17 |
| Y | fig. 1, 2 | 2–3, 5, 7 |
| A | & EP 2120158 A1, paragraphs [0011]–[0037], [0075], [0076], fig. 1, 2 & CN 101632079 A | 8–14, 16, 18 |
| Y | WO 2016/121493 A1 (NTT PC COMMUNICATIONS INCORPORATED) 04 August 2016, paragraph [0044], fig. 8 & US 2018/0012039 A1, paragraph [0074], fig. 8 | 2–3 |

☒ Further documents are listed in the continuation of Box C.    ☐ See patent family annex.

| | |
|---|---|
| *    Special categories of cited documents: | "T" later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X" document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&" document member of the same patent family |

| Date of the actual completion of the international search | Date of mailing of the international search report |
|---|---|
| 04.09.2018 | 18.09.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/023950

C (Continuation).    DOCUMENTS CONSIDERED TO BE RELEVANT

| Category* | Citation of document, with indication, where appropriate, of the relevant passages | Relevant to claim No. |
|-----------|-----------------------------------------------------------------------------------|-----------------------|
| Y | JP 2002-334245 A (TOSHIBA ENGINEERING CO.) 22 November 2002, paragraphs [0014]-[0016], fig. 3 (Family: none) | 5, 7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008521025 PCT

- JP 2014206696 A